(19) Europäisches Patentamt

European Patent Office

Office européen des brevets

(11) **EP 1 339 227 B1**

(12) **EUROPEAN PATENT SPECIFICATION**

(45) Date of publication and mention
of the grant of the patent:
**13.09.2006 Bulletin 2006/37**

(51) Int Cl.:
***H04N 5/235*** (2006.01)

(21) Application number: **03251097.6**

(22) Date of filing: **24.02.2003**

(54) **Image pickup apparatus**

Bildaufnahmevorrichtung

Dispositif de prise de vue

(84) Designated Contracting States:
**DE FR GB IT**

(30) Priority: **25.02.2002 JP 2002048433**

(43) Date of publication of application:
**27.08.2003 Bulletin 2003/35**

(73) Proprietor: **KABUSHIKI KAISHA TOSHIBA**
**Tokyo (JP)**

(72) Inventors:
• **Takemura, Yasuo**
**Tokyo (JP)**
• **Nishimaki, Akio**
**Tokyo (JP)**

(74) Representative: **Weitzel, David Stanley**
**Brookes Batchellor**
**102-108 Clerkenwell Road**
**London EC1M 5SA (GB)**

(56) References cited:
**EP-A- 1 148 713          EP-A- 1 318 668**
**US-A1- 2001 030 708          US-A1- 2001 040 632**
**US-B1- 6 285 398**

• **PATENT ABSTRACTS OF JAPAN vol. 2002, no. 04, 4 August 2002 (2002-08-04) & JP 2001 346096 A (MATSUSHITA ELECTRIC IND CO LTD), 14 December 2001 (2001-12-14)**

**Description**

BACKGROUND OF THE INVENTION

Technical Field of The Invention

The present invention relates to an image pickup apparatus, and in particular, to an image pickup apparatus capable of picking up an image of a subject having a wide range of luminance and conducting processing on an image signal which has been picked up.

Related Art

In a conventional camera using an image pickup device composed of a CCD sensor, image pickup is conducted so as to confine an incidence light quantity of the camera in a certain range because of a limit of storage capacity of electric charge and its characteristics. When picking up an image at an outdoor, therefore, such a dynamic range that an image can be picked up throughout the luminance range of the subject cannot be obtained, providing a defect in a problem in the image picked up. For this reason, the dynamic range is widened by using an electronic shutter function of the image pickup device, picking up an image with different shutter frequencies of time such as a high speed shutter and a low speed shutter, i.e., two different exposure frequencies of time, and conducting signal processing on resultant image signals.

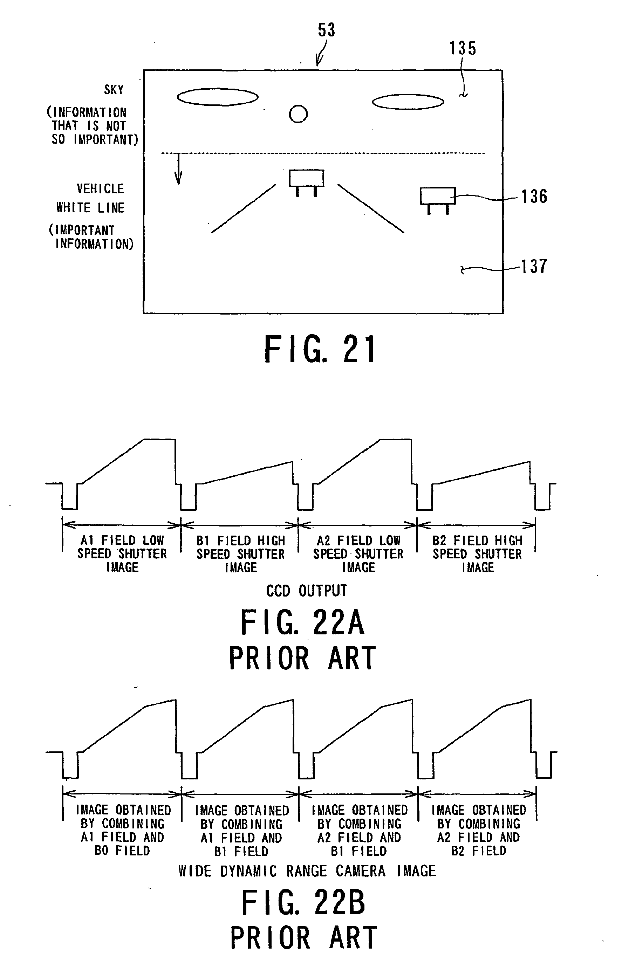

An operation principle of a conventional wide dynamic range camera 1 will now be described with reference to FIG. 22. FIG. 22 is a diagram of image signal processing in the conventional wide dynamic range camera 1. FIG. 22A shows a signal output of a CCD sensor (image pickup device). FIG. 22B shows a signal output of a high dynamic range camera image.

In FIG. 22, "A" fields are assigned to low speed shutter images, and "B" fields are assigned to high speed shutter images. The low speed shutter image is, for example, an image picked up with a shutter speed of 1/60 second, and the high speed shutter image is, for example, an image picked up with a shutter speed of 1/200 second. These image signals are, for example, image signals obtained by controlling an electronic shutter for directly supplying a shutter pulse to the image pickup device composed of the CCD sensor, and controlling the shutter speed, i.e., the exposure time.

The wide dynamic range camera picks up an image of a low luminance part of a subject with a low speed shutter (a high luminance part is saturated), and picks up an image of a high luminance part of the subject with a high speed shutter (an image of the low luminance part cannot be picked up). By combining both images, an image ranging from a low luminance part to a high luminance part of the subject can be picked up in one picture.

For example, an A1 field image (low speed shutter image) and a B0 field image (high speed shutter image) are combined. Subsequently, an A1 field image (low speed shutter image) and a B1 field image (high speed shutter image) are combined. Thereafter, the same operation is conducted repeatedly. In this case, speeds and the combination ratio of the low speed shutter and the high speed shutter are fixed.

The ratio of the shutter speeds is an expansion ratio of the dynamic range. Here, the low speed shutter speed is fixed to 1/60 second and the high speed shutter speed is fixed to 1/2000 second. Therefore, the wide dynamic range camera has an expansion ratio of approximately 33. Even if an auto-iris lens for automatically adjusting the incident light quantity is mounted on the wide dynamic range camera, the dynamic range is not expanded.

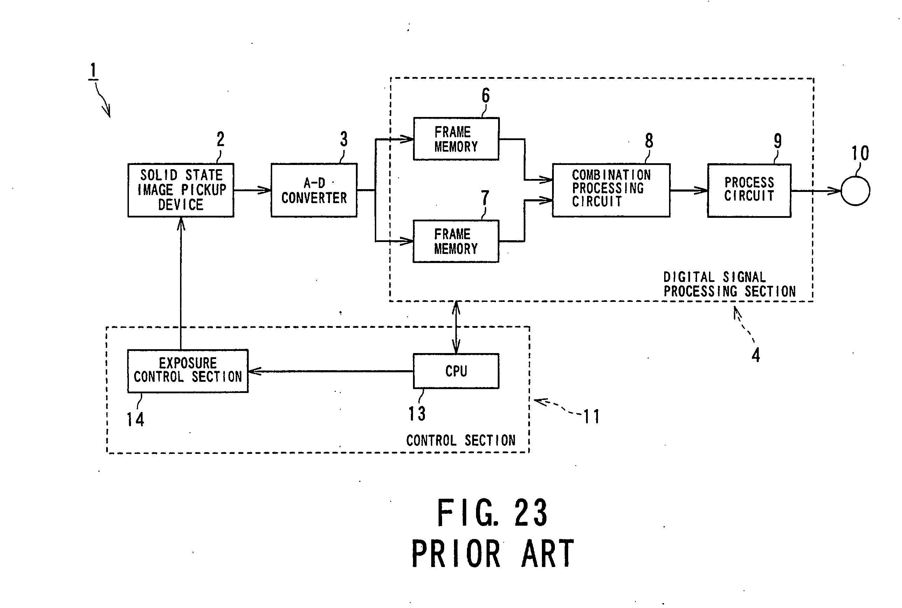

FIG. 23 is a block diagram of the conventional wide dynamic range camera 1. The wide dynamic range camera 1 obtains an image signal from a subject image with an image pickup device 2 using a photoelectric device such as a CCD sensor. The image signal thus obtained is converted from an analog signal to a digital signal (hereinafter referred to as A/D conversion) by an A/D converter 3. The resultant digital signal is sent to digital signal processing means 4.

The digital signal processing means 4 includes frame memories 6 and 7, a combination processing circuit 8 and a process circuit 9. The image signal sent to the digital signal processing means 4 is first input to the frame memories 6 and 7 and then written therein. The image signal read out from the frame memories 6 and 7 is sent to the combination processing circuit 8, processed in the process circuit 9 and output from an image signal output terminal 10.

On the other hand, the wide dynamic range camera 1 controls the digital signal processing means 4 and the image pickup device 2 by using a control section 11 included in the wide dynamic range camera 1. The control section 11 includes a CPU (central processing means) 13 and an exposure control section 14. The CPU 13 conducts computation (operation) processing on measured light data supplied from the digital signal processing means 4. A result of this computation processing is sent to the digital signal processing means 4 and the exposure control section 14. Control signals are generated by the digital signal processing means 4 and the exposure control section 14 to control the digital signal processing means 4 and the image pickup device 2, respectively.

The wide dynamic range camera 1 as described above is shown in, for example, Publication of Japanese Patent Application No. 61-255984.

In the conventional wide dynamic range camera 1, however, images of different electronic shutter frequencies of time are picked up several times and combined. Therefore, the conventional wide dynamic range camera 1 is effective for stationary pictures. However, the conventional wide dynamic range camera 1 is unsuitable for an apparatus that picks up an image of a moving subject, such as a supervisory camera or a vehicle-mounted camera.

On the other hand, in the conventional wide dynamic range camera 1 including a CCD sensor as the image pickup device 2, electric charges stored in the CCD sensor are read out sequentially. Therefore, time required from the image pickup time to the completion of image processing, i.e., image signal processing time is long. In the case where an image of a fast moving subject is picked up by the wide dynamic range camera 1, therefore, the image signal processing cannot follow the motion of the subject.

Especially, in the case where an image is picked up by the conventional wide dynamic range camera 1 from a moving body on which the conventional wide dynamic range camera 1 is installed for the purpose of, for example, controlling the moving body, there is a problem that the control operation cannot follow because of length of the image signal processing time in the wide dynamic range camera 1 even if the control operation is conducted on the basis of the image signal generated by image pickup.

The reader is referred to US 2001/030708 A1, EP-A-1 148 713 (PIXIM INC), and US-B-6 285 3981.

SUMMARY OF THE INVENTION

The present invention has been made considering the above-described circumstances.

In accordance with the invention there is provided an image pickup apparatus having an image pickup device to obtain a first image being exposed for a first period and a second image being exposed for a second period which is shorter than the first period, a controller to control the first period and the second period according to brightness of images, and a processor for combining the first image and the second image into a third image, characterized by comprising:

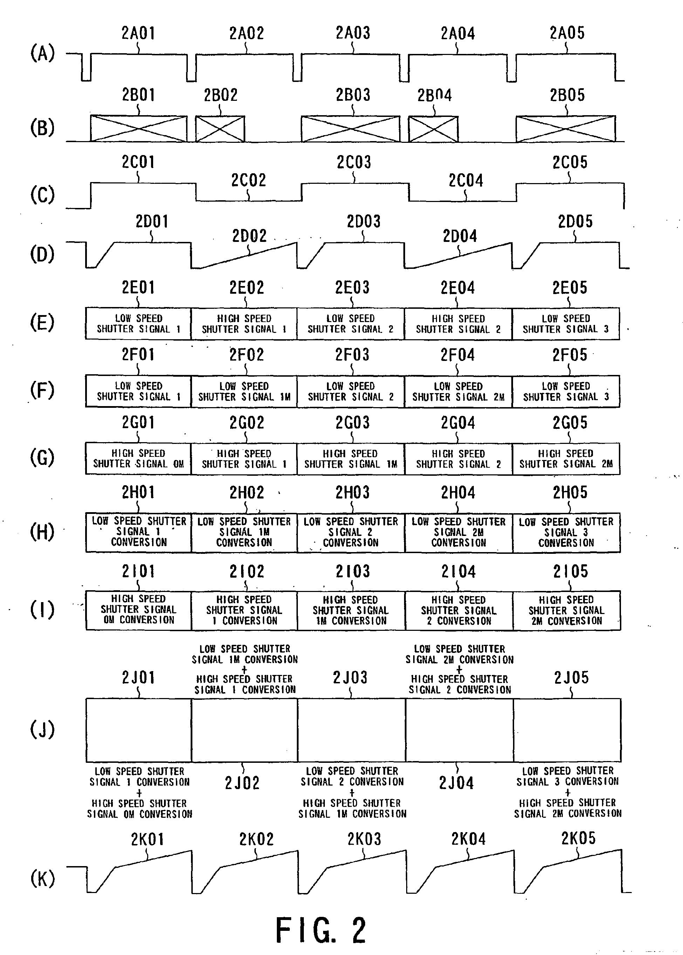

a dividing means for dividing the first and second images from the CMOS sensor into a plurality of sub-areas; and
a detecting means for detecting brightness information in each sub-area of the first and second images;
wherein the image pickup device includes a CMOS sensor which outputs the first or second images in a predetermined frame period (D in Fig. 2), and
wherein the controller controls alternatively to read out one of the first and second images within the frame period, and further including:

first means for determining a first period of the CMOS sensor to be exposed in a next frame period, using the brightness information obtained from the first image by the detecting means;
second means for determining a second period, independently from the first means, of the CMOS sensor to be exposed in a successive frame period, using the brightness information obtained from the second image by the detecting means.

In preferred examples, the control means comprises image signal information acquisition means for acquiring image signal information of the first image signal and the second image signal from the image pickup means and control signal generation means for varying the first image signal and the second image signal independently by using the image signal information acquired from the image signal information acquisition means and said control means controls the image signal processing means. The control signal generation means comprises: automatic gain control signal generation means for individually controlling amplification factors of the first image signal and the second image signal supplied from the image pickup means, on the basis of a result of computation of a ratio between the first exposure time and the second exposure time; characteristic conversion control signal generation means for individually conducting conversion control on input-output characteristics of the first image signal and the second image signal supplied from the image pickup means; and image combination ratio control signal generation means for individually controlling an image signal combination ratio used to combine the first image signal and the second image signal supplied from the image pickup means.

Furthermore, the control means comprises image signal information acquisition means for acquiring image signal information of the first image signal and image signal information of the second image signal from the image pickup means and luminance average value calculation means for calculating a luminance average value of the first image signal and the second image signal. The image signal information acquisition means includes means for dividing a picture obtained by image pickup into a plurality of parts in order to acquire a luminance average value of each of the first image signal and the second image signal in luminance average value calculation means, and the image signal information acquisition means comprises divided image luminance accumulation means for accumulating luminance of a divided image every divided picture division and divided image luminance peak value detection means for detecting a luminance peak value of a divided image, and the image signal information acquisition means calculates a luminance average value of each of the first image signal and the second image signal on the basis of a luminance accumulation result obtained by the divided image luminance accumulation means and a luminance peak value detection result obtained by the divided image luminance peak value detection means. Further, the image signal information acquisition means includes means for dividing a picture obtained by image pickup into a plurality of parts in order to acquire a luminance average value of each of the first image signal and the second image signal in a luminance average value calculation means, and the image signal information acquisition means comprises divided image luminance accumulation means for accumulating luminance of a divided image every divided picture division and divided image luminance peak value detection means for detecting a luminance peak value of a divided image, and when calculating a luminance average value in the luminance average value calculation means for obtaining a luminance average value of each of the first image signal and the second image signal, on the basis of luminance accumulation result of the divided image and the luminance peak value detection result of the divided image, the image signal information acquisition means extracts a high luminance area of the first image signal, calculates a luminance average value of the first image signal with the extracted area excluded, and calculates a luminance average value for an area of the second image signal corresponding to the extracted high luminance area of the first image signal.

Furthermore, the control means comprises image signal information acquisition means for acquiring image signal information of the first image signal and image signal information of the second image signal from the image pickup means and the image signal information acquisition means divides a picked-up picture into a plurality of parts, acquires image information for each of picture divisions and acquires image signal information of the first image signal and the second image signal by using the image information for each of the picture divisions.

Still furthermore, the control means comprises image signal information acquisition means for acquiring image signal information of the first image signal and image signal information of the second image signal from the image pickup means, and the image signal information acquisition means comprises divided image luminance accumulation means and divided image luminance peak value detection means as means for dividing a picked-up picture into a plurality of parts and acquiring image information for each of picture divisions.

Still furthermore, the control means comprises computation means for calculating a ratio between the first exposure time and the second exposure time, and said control means independently varies the first exposure time and the second exposure time by using a result of calculation conducted in the computation means.

Still furthermore, the control means comprises computation means for calculating a ratio between the first exposure time and the second exposure time, and in order to obtain a suitable image signal, the control means executes a result of calculation conducted in the computation means on the basis of image information acquired by the image signal information acquisition means for acquiring image signal information of the first image signal and image signal information of the second image signal from the first image signal and the second image signal.

Still furthermore, the control means comprises computation means for calculating a ratio between the first exposure time and the second exposure time when varying the first exposure time and the second exposure time independently and automatic gain control signal generation means for individually controlling amplification factors of the first image signal and the second image signal obtained by the image pickup means, on the basis of a result of calculation conducted by the computation means.

Still furthermore, the control means comprises computation means for calculating a ratio between the first exposure time and the second exposure time and characteristic conversion control signal generation means for individually conducting conversion and control on input-output characteristics of the first image signal and the second image signal obtained by the image pickup means, on the basis of a result of calculation conducted by the computation means.

Still furthermore, the control means comprises computation means for calculating a ratio between the first exposure time and the second exposure time when varying the first exposure time and the second exposure time independently and image combination ratio control signal generation means for individually controlling an image signal combination ratio used to combine the first image signal and the second image signal obtained by the image pickup means, on the basis of a result of calculation conducted by the computation means.

Further, the control means may include means for shifting final generation timing of an electronic shutter so as to determine the first exposure time and the second exposure time, by taking one CLOCK of a timing generator as unit.

The image signal processing means comprises: an automatic gain control circuit provided on a signal path of the first image signal and the second image signal so as to control gains of the first image signal and the second image signal; input-output characteristic conversion circuits each provided on each of signal paths of the first image signal and the second image signal subjected to gain control in the automatic gain control circuit so as to control input-output characteristics of the first image signal and the second image signal; and image signal combination means for combining the first image signal and the second image signal subjected to input-output characteristic conversion in the input-output characteristic conversion circuits into one image signal.

According to the image pickup apparatus of the present invention, the dynamic range expansion factor of the camera may be varied at high speed according to the luminance difference in the subject, and a picked-up image optimized to the subject luminance difference is obtained. As a result, it is possible to provide an image pickup apparatus that is effective as a vehicle-mounted camera for image recognition that is extremely large in luminance difference of the subject, or a monitor or supervisory camera for simultaneously picking up images indoors and night outdoors.

It becomes possible to reduce the time required since image pickup until completion of image processing, by using a CMOS sensor as the image pickup device included in the image pickup means of the image pickup apparatus, selecting and extracting a highly important area from an image pickup picture range, and thereby reducing the information content of the image signal subject to image signal processing. Thus, it becomes possible to provide an image pickup apparatus that is effective in image pickup from a moving body in which the subject changes every moment.

Especially, in the case where it is necessary to quickly control the next operation by using the image pickup information supplied from the image pickup apparatus, such as the case where the moving body is controlled by using an image signal supplied from an image pickup apparatus installed on the moving body, the image pickup apparatus according to the present invention is effective.

The nature and further characteristic features of the present invention will be made more clear from the following descriptions made with reference to the accompanying drawings.

BRIEF DESCRIPTION OF THE DRAWINGS

In the accompanying drawings:

FIG. 1 is a circuit block diagram showing an embodiment of an image pickup apparatus according to the present invention;
FIG. 2 is a diagram showing image signal combination of a low speed shutter image signal and a high speed shutter image signal in an image pickup apparatus according to the present invention;
FIG. 3 is a diagram showing image pickup characteristic of an image pickup device included in an image pickup apparatus;
FIG. 4 is a diagram showing a signal processing output characteristic of an image pickup apparatus according to the present invention;
FIG. 5 is a diagram showing an example of division of a picture picked up by an image pickup apparatus according to the present invention;
FIG. 6 is a block diagram of a luminance accumulation value circuit shown in FIG. 1;
FIG. 7 is a block diagram of a luminance peak value detection circuit shown in FIG. 1;
FIG. 8 is a block diagram of a gate waveform generation circuit shown in FIG. 1;
FIG. 9 is a block diagram of a microcomputer circuit shown in FIG. 1;
FIG. 10 is a diagram showing processing contents of an image obtained by dividing a picture picked up, in which FIG. 10A is a picture showing a low speed luminance accumulation value, FIG. 10B is a picture showing a low speed luminance peak value, FIG. 10C is a picture showing calculation of a saturated area on the basis of a low speed luminance accumulation value and a low speed luminance peak value, and FIG. 10D is a picture showing a high speed luminance accumulation value;
FIG. 11 is a diagram (graph) showing a shift of a luminance average value supplied from luminance average value calculation means included in an image pickup apparatus according to the present invention;
FIG. 12 is a state transition diagram showing transition of a control state of electronic shutter exposure of an image pickup device included in an image pickup apparatus according to the present invention;
FIG. 13 is a diagram showing a picture luminance variation caused by an alternating current illumination light source;
FIG. 14 is an internal block diagram showing electronic shutter pulse generation in electronic shutter circuit included in an image pickup apparatus according to the present invention;
FIG. 15 includes FIG. 15A being a diagram showing a VD pulse and FIG. 15B being a diagram showing electronic shutter pulse generation timing seen in a time scale of a V frequency;
FIG. 16 includes FIG. 16A being a diagram showing an HD pulse in a V frequency (from t3 to t5) and FIG. 16B being a diagram showing electronic shutter pulse generation timing seen in a time scale of an H frequency;
FIG. 17 includes FIG. 17A being a diagram showing several CLK pulses in a V frequency (from t3 to t5) shown in FIG. 15 and FIG. 17B being a diagram showing electronic shutter pulse generation timing seen in a time scale of several CLK frequencies;
FIG. 18 includes FIG. 18A being a diagram showing several CLK pulses in a V frequency and FIG. 18B being a diagram showing how a phase of an electronic shutter pulse having a frequency of several CLKs is varied by a shift register while taking one CLOCK as a unit;
FIG. 19 is a circuit block diagram showing a second embodiment of an image pickup apparatus according to the present invention;
FIG. 20 is a diagram showing a difference in stored electric charge readout time caused by a difference in image pickup device included in an image pickup apparatus according to the present invention, in which FIG. 20A shows the case of a CCD sensor, whereas FIG. 20B shows the case of a CMOS sensor.

FIG. 21 is a diagram showing an example of a second embodiment of an image pickup apparatus according to the present invention used as a camera installed on a vehicle, in which the image pickup apparatus is installed on a moving body;

FIG. 22 shows a conventional image pickup apparatus, in which FIG. 22A is a diagram showing a CCD sensor output and FIG. 22B is a diagram showing an image output of the image pickup apparatus; and

FIG. 23 is a circuit block diagram of a conventional image pickup apparatus.

DESCRIPTION OF THE PREFERRED EMBODIMENTS

Hereafter, embodiments of an image pickup apparatus according to the present invention will be described with reference to the accompanying drawings.

[First Embodiment]

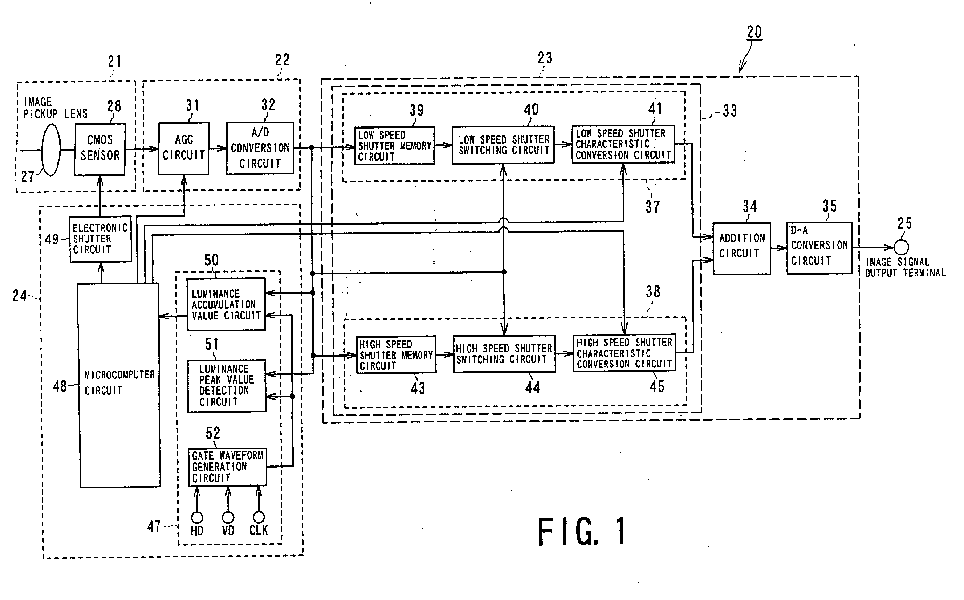

FIG. 1 shows an example of a circuit block diagram showing a first embodiment of an image pickup apparatus 20 according to the present invention.

The image pickup apparatus 20 shown in FIG. 1 includes image pickup means 21, analog signal processing means 22 and digital signal processing means 23, which serve as image signal processing means, control means 24, and an image signal output terminal 25 serving as image signal output means.

The image pickup apparatus 20 picks up an image of a subject by using an image pickup means 21 and generates an image signal (analog signal). The generated analog image signal is converted from the analog signal to a digital signal (hereafter referred to as A/D conversion) in the analog signal processing means 22 and output as a digital image signal. This digital image signal is supplied to two branches. In one branch, the digital image signal is input to the digital signal processing means 23 and subjected to signal processing. After signal processing, the digital image signal is converted from the digital signal to an analog signal (hereafter referred to as D/A conversion) and then output from an image signal output terminal 25.

In the other branch, the image signal output from the analog signal processing means 22 is input to the control means 24. The control means 24 generates control signals so as to control the image pickup means 21, the analog signal processing means 22, and the digital signal processing means 23. Since the control means 24 controls these means, it becomes possible for the image pickup apparatus 20 to pick up an image always at an optimum shutter speed even for a subject having a luminance difference of wide range.

Each of the means in the image pickup apparatus 20 shown in FIG. 1 will be described hereunder.

The image pickup means 21 includes an image pickup lens 27 for picking up image light that indicates a subject image, and, for example, a CMOS (Complementary Metal-Oxide-Semiconductor) sensor 28 serving as an image pickup device.

The image pickup means 21 picks up an image light that indicates the subject image, by using the image pickup lens 27, and forms an image on a light receiving plane of the CMOS sensor 28. As for the image light forming an image, the quantity of light exposed to the CMOS sensor 28 is adjusted by adjusting the exposure time, i.e., the electronic shutter speed. The CMOS sensor 28 conducts photoelectric conversion, and electric charge having a quantity corresponding to the image light quantity is stored in the CMOS sensor 28. An image signal corresponding to the quantity of the stored electric charge is output from the CMOS sensor 28.

When picking up an image of the subject, the electronic shutter in the CMOS sensor 28 repeats the image pickup operation alternately at two different shutter speeds. The image pickup is conducted at two shutter speeds, i.e., a slower shutter speed (hereinafter referred to as low shutter speed) and a faster shutter speed (hereinafter referred to as high shutter speed). Image signals alternately output from the CMOS sensor 28 are output from the image pickup means 21 and input to the analog signal processing means 22.

The analog signal processing means 22 includes an automatic gain control circuit (hereinafter referred to as AGC circuit) 31 for conducting gain adjustment on the analog image signals alternately input thereto, and an A/D conversion circuit 32 for conducting A/D conversion. The analog image signals input to the analog signal processing means 22 are transmitted to the AGC circuit 31 and the A/D conversion circuit 32 successively and subjected to signal processing. The AGC circuit 31 can vary and adjust the gain every analog image signal according to a control signal supplied from the control means 24.

The A/D conversion circuit 32 conducts A/D conversion on the analog image signals. The image signals after the conversion, i.e., the digital image signals are alternately output from the analog signal processing means 22 and alternately input to the digital signal processing means 23.

The digital signal processing means 23 includes image signal processing execution means 33, an addition circuit 34 serving as image signal combination means, and a D/A conversion circuit 35 for conducting the D/A conversion on an image signal resulting from the combination.

The image signal processing execution means 33 includes low speed shutter signal processing means 37 for conducting signal processing on a digital image signal picked up with the low speed shutter and high speed shutter signal processing means 38 for conducting signal processing on a digital image signal picked up with the high speed shutter. Each of the low speed shutter signal processing means 37 and the high speed shutter signal processing means 38 includes a memory circuit, a switching circuit, and a characteristic conversion circuit. In other words, the low speed shutter signal processing means 37 includes a low speed shutter memory circuit 39, a low speed shutter switching circuit 40, and a low speed shutter characteristic conversion circuit 41. On the other hand, the high speed shutter signal processing means 38 includes a high speed shutter memory circuit 43, a high speed shutter switching circuit 44, and a high speed shutter characteristic conversion circuit 45.

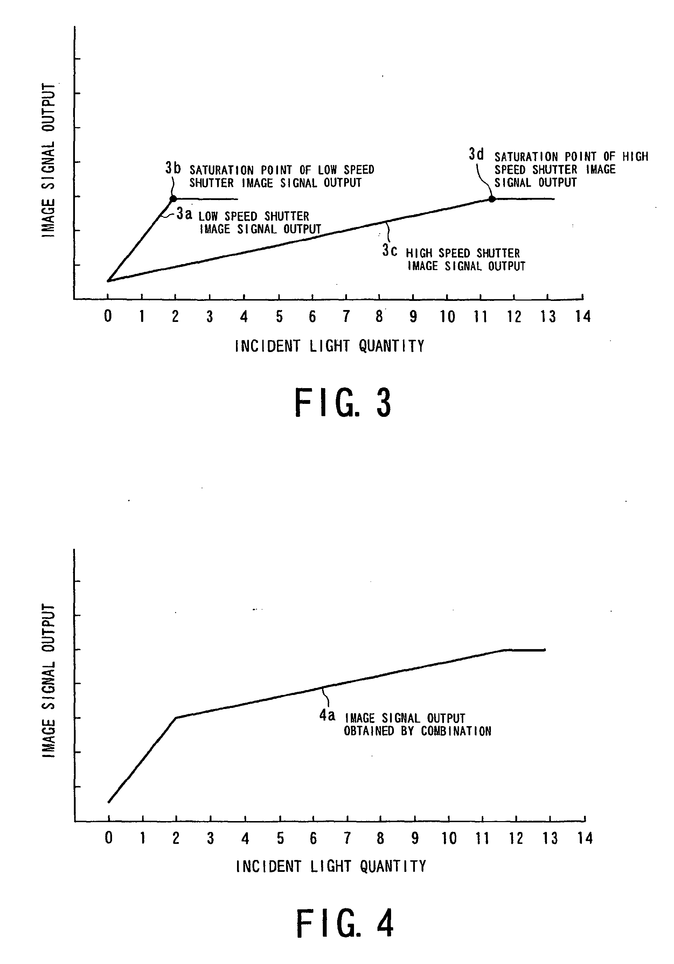

The image signal processing conducted in the image signal processing execution means 33 will be described hereunder with reference to FIGS. 2 and 3.

FIG. 2 includes (A) to (K) representing operation diagrams showing an operation of the image pickup apparatus 20 in the time series.

FIG. 2(A) shows a vertical synchronization signal. The image pickup apparatus 20 operates in synchronism with a frequency of the vertical synchronization signal. In an interval (one vertical synchronization interval) during which the CMOS sensor 28 picks up an image and outputs an image signal, 2A01 is an image signal output interval of a low speed shutter side (hereinafter referred to as low speed shutter interval), 2A02 is an image signal output interval of a high speed shutter side (hereinafter referred to as high speed shutter interval), 2A03 is a low speed shutter interval, 2A04 is a high speed shutter interval, and 2A05 is a low speed shutter interval.

FIG. 2(B) shows an electronic shutter operation of the CMOS sensor 28. Because of a relation between the electric charge storage and the readout time of the CMOS sensor 28, a delay of one vertical synchronization interval occurs in the electronic shutter operation of the CMOS sensor 28. In the electronic shutter operation according to the vertical synchronization signal as shown in FIG. 2(A), therefore, 2B01 becomes a high speed shutter operation interval and 2B02 becomes a low speed shutter operation interval. In the same way, a high speed shutter operation interval and a low speed shutter operation interval are repeated, and the operation intervals of 2B03, 2B04 and 2B05 are obtained.

FIG. 2(C) shows operation of the AGC circuit 31. The AGC circuit 31 operates independently at the low speed shutter operation interval and the high speed shutter operation interval. 2C01 becomes a low speed shutter operation interval, and 2C02 becomes a high speed shutter operation interval. The same is repeated, and the operation intervals 2C03, 2C04 and 2C05 are obtained.

FIG. 2(D) shows image signals output from the CMOS sensor 28. 2D01 becomes a low speed shutter image signal, and 2D02 becomes a high speed shutter image signal. The same is repeated, and the operation intervals 2D03, 2D04 and 2D05 are obtained.

The output characteristics of the low speed shutter image signal and the high speed shutter image signal output from the CMOS sensor shown in FIG. 2(D) will be described hereunder in a supplementary manner with reference to FIG. 3.

FIG. 3 is a graph showing the image pickup characteristic of the CMOS sensor 28 and shows an output level of the low speed shutter image signal and an output level of the high speed shutter image signal each as a function of a quantity of incidence light. In FIG. 3, the output characteristic of the low speed shutter image signal is represented by "3a", and a saturation point of the low speed shutter is represented by "3b". On the other hand, the output characteristic of the high speed shutter image signal is represented by "3c", and a saturation point of the high speed shutter is represented by "3d". According to FIG. 3, the low speed shutter image signal arrives at saturation with a small quantity of incidence light and arrives at the saturation earlier. On the contrary, the high speed shutter image signal arrives at saturation with a larger quantity of incidence light and arrives at the saturation later. In the characteristic of the image output signals shown in FIG. 2(D), therefore, 2D01 (the low speed shutter image signal) saturates and its output reaches the top at one vertical synchronization interval. On the other hand, 2D02 (the high speed shutter image signal) does not saturate and its output increases gently at one vertical synchronization interval.

FIG. 2(E) to FIG. 2(J) are diagrams intelligibly showing the operation.

FIG. 2(E) shows the same meaning as that of FIG. 2(D). Both FIG. 2(E) and FIG. 2(D) show the output of the A/D conversion circuit included in the analog signal processing means 22 shown in FIG. 1.

In FIG. 2(E), 2E01 becomes a low speed shutter image signal, and 2E02 becomes a high speed shutter image signal. The same is repeated, and image signals 2E03, 2E04 and 2E05 are output. According to FIG. 2(E), both the low speed shutter image signal and the high speed shutter image signal are intermittent signals. For example, paying attention to the low speed shutter image signal, it is an intermittent signal formed of 2E01, 2E03 and 2E05.

In FIG. 2(E), the low speed shutter image signal and the high speed shutter image signal are abbreviated to low speed shutter signal and high speed shutter signal, respectively. Hereafter, the same abbreviation is also conducted diagrams other than FIG. 2(E).

The low speed shutter image signal output from the A/D conversion circuit 32 included in the analog signal processing means 22 shown in FIG. 1 is input to, on the one hand, the low speed shutter switching circuit 40 via the low speed shutter memory circuit 39 and input to, on the other hand, the low speed shutter switching circuit 40 directly. The low speed shutter switching circuit 40 generates a continuous image signal from the intermittent image signal by switching an image signal input between an input from the low speed shutter memory circuit 39 and an input from the A/D conversion circuit 32 included in the analog signal processing means 22 every vertical interval.

FIG. 2(F) shows a low speed shutter image signal that has become a continuous signal. In FIG. 2(F), signals denoted by characters including M are image signals input from the low speed shutter memory circuit 39. The signal shown in FIG. 2(F) is generated by conducting switching to the input from the low speed shutter memory circuit 39 and inputting the low speed shutter image signal stored in a memory in the low speed shutter memory circuit 39, in the intervals of 2E02 and 2E04 shown in FIG. 2(E) during which the low speed shutter image signal is missing.

On the other hand, the high speed shutter image signal is shown in FIG. 2(G). In the high speed shutter image signal as well, a process for generating a continuous signal is the same as the case of the low speed shutter image signal. Therefore, description of the high speed shutter image signal will be omitted here.

The low speed shutter image signal and the high speed shutter image signal made continuous by the low speed shutter switching circuit 40 and the high speed shutter switching circuit 44 are subjected to, for example, characteristic conversion for obtaining the gamma characteristics in the low speed characteristic conversion circuit 41 and the high speed characteristic conversion circuit 45, respectively. The low speed shutter image signal and the high speed shutter image signal obtained after the characteristic conversion correspond to FIG. 2(H) and FIG. 2(I), respectively.

The addition circuit 34 serving as the image signal combination means shown in FIG. 1 adds the low speed shutter image signal and the high speed shutter image signal subjected to characteristic conversion respectively in the low speed characteristic conversion circuit 41 and the high speed characteristic conversion circuit 45 included in the image signal processing execution means 33 and then obtains one combined digital image signal.

FIG. 2(J) and FIG. 2(K) are diagrams showing addition of the low speed shutter image signal and the high speed shutter image signal subjected to characteristic conversion. FIG. 2 (K) shows FIG. 2(J) in an analog form. FIG. 2(J) and FIG. 2(K) show the same meaning. FIG. 4 shows an output characteristic of the obtained combined image signal. The output characteristic of the combined image signal shown in FIG. 4 becomes a characteristic obtained by combining the output characteristic "3a" of the low speed shutter image signal and the output characteristic "3c" of the high speed shutter image signal shown in FIG. 3. In each of intervals 2K01 to 2K05 shown in FIG. 2(K), therefore, a combined image signal output (digital signal) similar to the image signal output characteristic shown in FIG. 4

The D/A conversion circuit 35 shown in FIG. 1 conducts D/A conversion on the image signal obtained by the combination conducted in the addition circuit 34 and outputs an analog image signal. The analog image signal output from the D/A conversion circuit 35 is transmitted to the image signal output means and output from the image signal output terminal 25 serving as the image signal output means, as an output of the image pickup apparatus 20.

The control means 24 includes image signal information acquisition means 47, a microcomputer circuit 48 serving as control signal generation means and an electronic shutter circuit 49.

The control means 24 acquires image signal information from the low speed shutter image signal and the high speed shutter image signal in the image signal information acquisition means 47, and generates control signals for controlling the image pickup apparatus 20 on the basis of the acquired image signal information in the microcomputer circuit 48. Among the control signals generated by the microcomputer circuit 48, control signals for controlling the image pickup means 21 are input to the electronic shutter circuit 49. The electronic shutter circuit 49 thus outputs control signals for controlling the electronic shutter of the CMOS sensor 28.

The image signal information acquisition means 47 first divides an image signal corresponding to one frame of picture obtained by the image pickup operation, in order to acquire image signal information. The image signal information acquisition means 47 includes a luminance accumulation value circuit 50 serving as divided image luminance accumulation means for accumulating luminance, which is image signal information, with respect to each of image signals obtained by the division, a luminance peak value detection circuit 51 serving as divided image luminance peak value detection means for detecting a peak value of luminance, and a gate waveform generation circuit 52 for dividing the image signal corresponding to one frame of picture obtained by the image pickup operation.

The image signal information acquisition means 47 first divides the image signal corresponding to one frame of picture obtained by the image pickup operation in order to calculate A/Divided image luminance accumulation value and a divided image luminance peak value as image signal information.

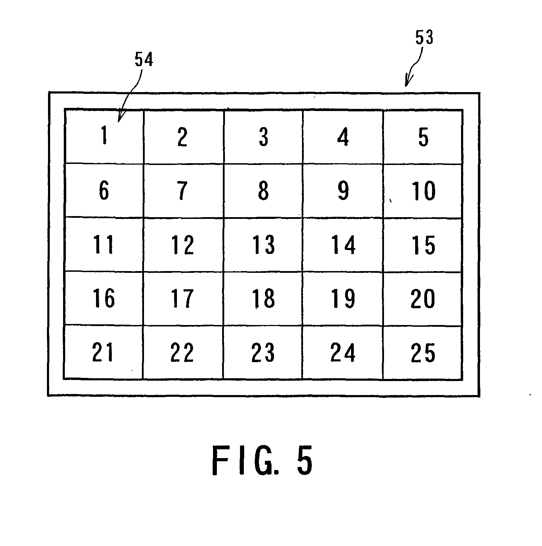

FIG. 5 is a diagram showing how an image signal corresponding to one frame of picture is divided and one frame of picture is divided. According to FIG. 5. in a whole frame of picture 53 obtained by the image pickup operation, an image signal corresponding to one frame of picture is divided into, for example, 25 areas, and an assembly of image signals of 25 picture divisions 54 is thus obtained. This picture division is executed by using a gate signal generated by the gate waveform generation circuit 52 included in the image signal information acquisition means 47.

The gate waveform generation circuit 52 generates the gate signal by using a horizontal synchronization pulse (hereinafter referred to as HD pulse), a vertical synchronization pulse (hereinafter referred to as VD pulse), and a clock pulse (hereinafter referred to as CLK pulse). The gate signal is transmitted to the luminance accumulation value circuit 50 for accumulating luminance and the luminance peak value detection circuit 51 for detecting a peak value of luminance. An image signal corresponding to one frame of picture in the whole frame of picture 53 obtained by the image pickup operation is divided into 25 picture divisions 54.

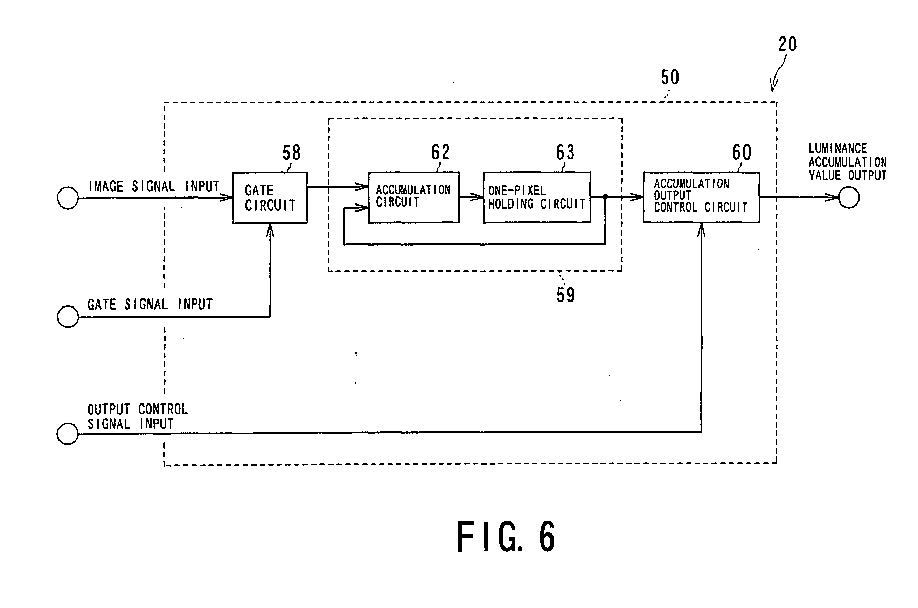

FIG. 6 is a block diagram of the luminance accumulation value circuit 50 serving as the division image luminance accumulation means included in the image signal information acquisition means 47.

The luminance accumulation value circuit 50 shown in FIG. 6 calculates a luminance accumulation value every image signal corresponding to each of the picture divisions 54. The luminance accumulation value circuit 50 inputs the image signal output from the analog signal processing means 22 and the gate signal generated by the gate waveform generation circuit 52 to the gate circuit 58, and gates an image signal from a picture range of a preset picture division 54. The gated image signal is subjected to luminance accumulation in an accumulation processing section 59. A luminance accumulation value is output from an accumulation output control circuit 60 in accordance with a control signal from the microcomputer circuit 48. The output luminance accumulation value is input to the microcomputer circuit 48.

The luminance accumulation executed in the accumulation processing section 59 is conducted on each of pixels in the gated image signal and conducted in an accumulation circuit 62 and a one-pixel holding circuit 63 which are included in the accumulation processing section 59. The accumulation circuit 62 adds a luminance value of an input image signal corresponding to one pixel and a luminance value of image signals corresponding to pixels already completed in accumulation processing and inputs a luminance value obtained by the addition to the one-pixel holding circuit 63. The one-pixel holding circuit 63 stores the input luminance value and feeds back the stored luminance value to the accumulation circuit 62.

Addition of the luminance value fed back and the luminance value of the image signal input to the accumulation circuit 62 is repeated, and an accumulation value of the luminance of the gated image signal is calculated. As for the calculated luminance accumulation value, the output of the one-pixel holding circuit 63 is accepted by an accumulation output control circuit 60 according to an output control signal from the microcomputer circuit 48 shown in FIG. 1. The accepted luminance accumulation value is output from the accumulation output control circuit 60 and the transmitted to the microcomputer circuit 48.

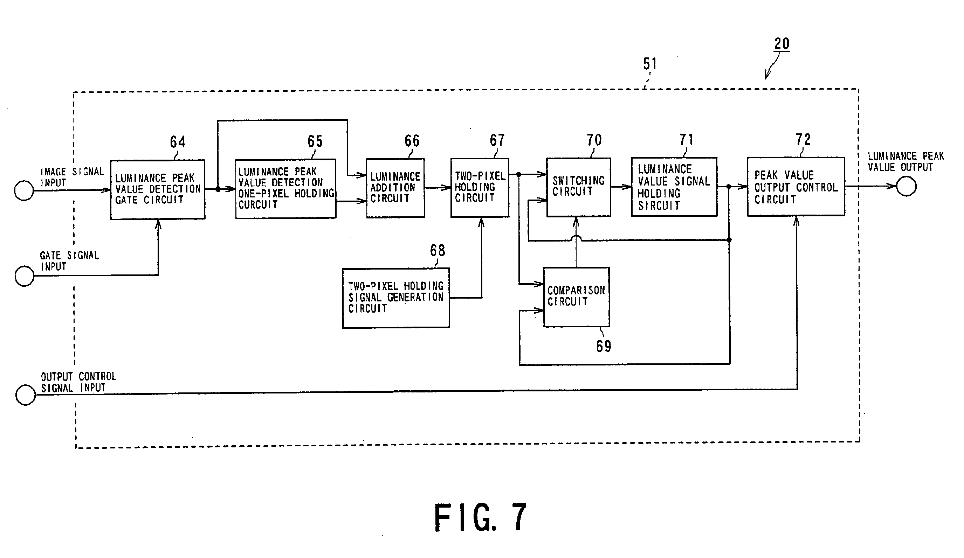

On the other hand, FIG. 7 is a block diagram of the luminance peak value detection circuit 51 serving as the division image luminance peak value detection means included in the image signal information acquisition means 47.

The luminance peak value detection circuit 51 detects a peak value of a luminance value every image signal corresponding to each of the picture divisions 54. In the same way as the luminance accumulation value circuit 50, the luminance peak value detection circuit 51 inputs the image signal output from the analog signal processing means 22 and the gate signal generated by the gate waveform generation circuit 52 to a peak value detection gate circuit 64 and gates an image signal from a picture range of the preset picture division 54. The peak value detection gate circuit 64 outputs the gated image signal pixel by pixel.

A luminance peak value of the gated image signal is detected. The detection of the luminance peak value is conducted after luminance values of two successive pixels are added. This is because the magnitude of the signal changes pixel by pixel in the case where an optical color filter of the CMOS sensor 28 is a complementary color mosaic. By adding luminance values of two pixels, an influence of a difference in the color filter can be eliminated.

In order to add luminance values of two pixels, an input current signal and a signal obtained by delaying the current signal by one pixel in the peak value detection one-pixel holding circuit 65, i.e., a signal preceding the current signal by one pixel are added in a luminance addition circuit 66. The added luminance values of the two pixel are subjected to the peak value detection processing as one unit and input to a two-pixel holding circuit 67. The two-pixel holding circuit 67 receives a signal from a two-pixel holding signal generation circuit 68 and generates a luminance value signal with pixel values corresponding to two pixels take as the unit.

The luminance value signal containing the current signal output from the two-pixel holding circuit 67 is input to a comparison circuit 69 and compared with a luminance value signal containing a signal preceding the current signal by two pixels. The comparison circuit 69 compares two luminance value signals with each other, generates a selection signal for selecting a luminance value signal corresponding to a greater luminance value, and supplies the luminance value signal to a switching circuit 70. The switching circuit 70 so as to select one of the current signal and a luminance value signal containing a signal preceding the current signal by two pixels, which has a larger luminance value, on the basis of the selection signal supplied from the comparison circuit 69. The selected signal is input to a luminance value signal holding circuit 71 so as to be held therein.

The luminance value signal held in the luminance value signal holding circuit 71 is fed back to the comparison circuit 69, and the comparison processing between the luminance value signal fed back and the luminance value signal supplied from the two-pixel holding circuit 67 is repeated. This comparison processing is conducted until the outputting function of the image signal from the peak value detection gate circuit 64 is finished. After the completion of the comparison processing, a peak value output control circuit 72 accepts the output of the luminance value signal holding circuit 71, i.e., the output of the luminance peak value signal according to an output control signal supplied from the microcomputer circuit 48 shown in FIG. 1. The output of the luminance peak value signal thus accepted is output from the peak value output control circuit 72 and transmitted to the microcomputer circuit 48.

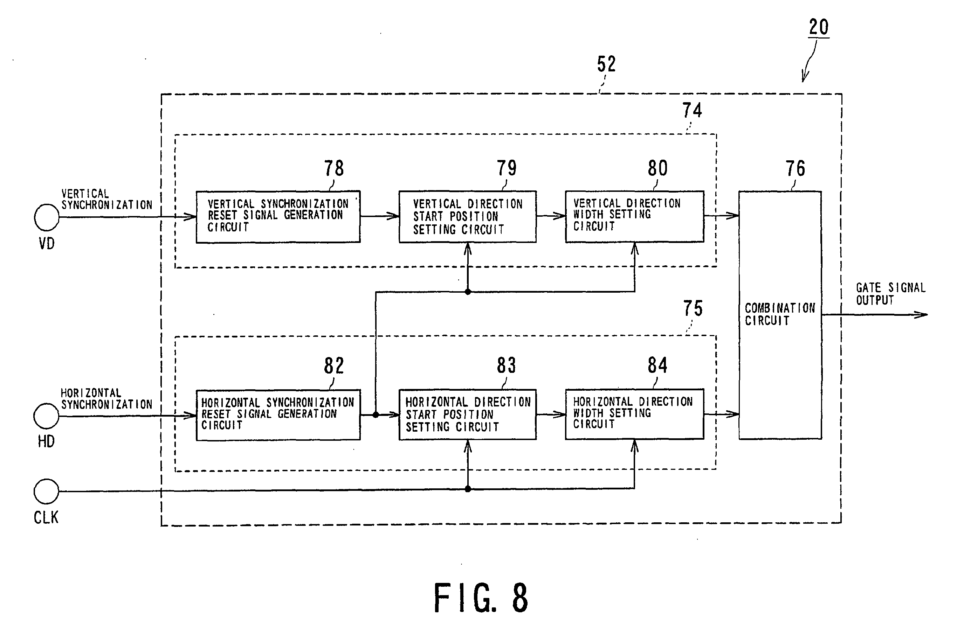

The gate waveform generation circuit 52 generates a gate signal for dividing a picture in order to detect the accumulation value and the peak value of luminance. A block diagram of the gate waveform generation circuit 52 is shown in FIG. 8. This gate waveform generation circuit 52 includes a vertical direction setting section 74 and a horizontal direction setting section 75 for setting a gating range, and a combination circuit 76 for generating the gate signal. The gate waveform generation circuit 52 generates and outputs the gate signal for setting a gating area on the basis of three input signals, the VD pulse, the HD pulse, and the CLK pulse.

Setting of the gate range in the vertical direction is conducted by the vertical direction setting section 74. The VD pulse input to the vertical direction setting section 74 is input to a vertical synchronization reset signal generation circuit 78. The vertical synchronization reset signal generation circuit 78 generates a reset signal, and the generated reset signal is input to a vertical direction start position setting circuit 79. The vertical direction start position setting circuit 79 counts the HD pulses and determines the start point in the vertical direction. When the start point in the vertical direction is determined, a width in the vertical direction can be set from the start point by counting the HD pulses in a vertical direction width setting circuit 80. The width in the vertical direction set by the vertical direction width setting circuit 80 is input to a combination circuit 76 as a vertical width signal.

On the other hand, setting of the gate range in the horizontal direction is conducted by the horizontal direction setting section 75. The VD pulse input to the horizontal direction setting section 75 is input to a horizontal synchronization reset signal generation circuit 82. The horizontal synchronization reset signal generation circuit 82 generates a reset signal, and the generated reset signal is input to a horizontal direction start position setting circuit 83. The horizontal direction start position setting circuit 83 counts the CLK pulses and determines the start point in the horizontal direction. When the start point in the horizontal direction is determined, a width in the horizontal direction can be set from the start point by counting the CLK pulses in a horizontal direction width setting circuit 84. The width in the horizontal direction set by the horizontal direction width setting circuit 84 is output as a horizontal width signal and input to the combination circuit 76.

The vertical width signal and the horizontal width signal respectively obtained from the vertical direction width setting circuit 80 and the horizontal direction width setting circuit 84 are combined in the combination circuit 76. A signal obtained by the combination is output from the gate waveform generation circuit 52 as the gate signal.

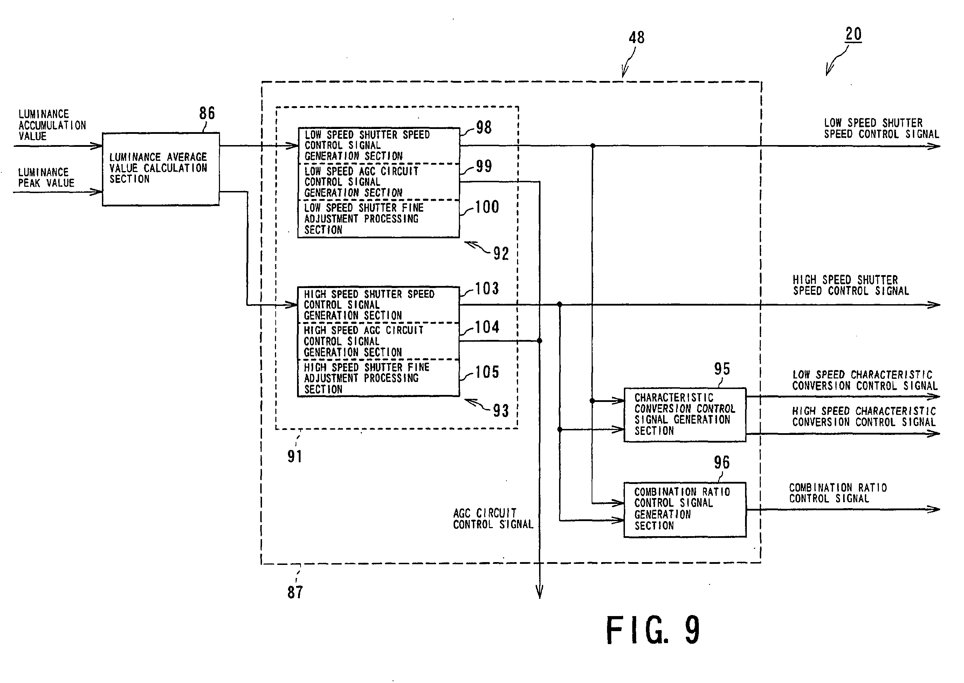

A circuit block diagram of the microcomputer circuit 48 included in the control means 24 is shown in FIG. 9.

The microcomputer 48 is supplied with the accumulation value and the peak value of luminance respectively from the luminance accumulation value circuit 50 and the luminance peak value detection circuit 51 in the image signal information acquisition means 47 as image signal information. The accumulation value and the peak value of luminance thus input are then input to luminance average value calculation means 86, and an average value of luminance is calculated. The average value of luminance thus calculated is input to control signal generation means 87, and an electronic shutter speed is then calculated. Subsequently, control signals for controlling respective means and sections of the image pickup apparatus 20 so as to obtain a suitable picked-up image from a calculation result of the electronic shutter speed.

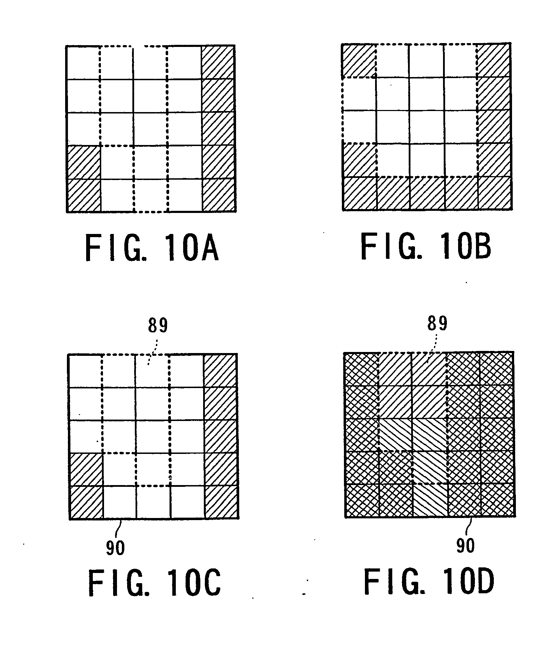

An example of visual representation of data referred to by the microcomputer circuit 48 is shown in FIG. 10. Luminance average value calculation processing conducted by the luminance average value calculation means 86 provided for the microcomputer circuit 48 will be described hereunder with reference to FIG. 10.

The luminance average value calculation means 86 classifies the picture divisions 54 shown in FIG. 5 into an area saturated in luminance (hereinafter referred to as saturated luminance area) 89 and an area that is not saturated in luminance (hereinafter referred to as unsaturated luminance areas) 90, on the basis of the luminance accumulation value of the low speed shutter image signal (hereinafter referred to as low speed luminance accumulation value) accumulated in luminance by the luminance accumulation value circuit 50 and the luminance peak value of the low speed shutter image signal (hereinafter referred to as low speed luminance peak value) obtained from the luminance peak value detection circuit 51.

As for the classification into the saturated luminance area 89 and the unsaturated luminance area 90, a luminance average value of the low speed shutter image signal (hereinafter referred to as low speed luminance average value) is obtained from the low speed luminance accumulation value of each picture division 54.

FIG. 10A is a diagram of picture divisions 54 showing the low speed luminance accumulation value. For example, it is now supposed that the luminance level has a width of 8 bits ($2^8 = 256$) and the low speed luminance average value is 200. An area that is at least 200 in low speed luminance average value is extracted. The extracted area that is at least 200 in low speed luminance average value is an area surrounded by a broken line in FIG. 10A.

Subsequently, an area in which the luminance peak value obtained from the same low speed shutter image signal becomes the maximum value of the 8-bit width is extracted. FIG. 10B is a diagram of picture divisions 54 showing the low speed luminance peak value. The extracted area in which the low speed luminance peak value becomes the maximum value is an area surrounded by a broken line in FIG. 10B.

Subsequently, an area in which the low speed luminance average value is at least 200 and the low speed luminance peak value is the maximum value of the 8-bit width is extracted. FIG. 10C is a diagram showing calculation of the saturated luminance area 89 from the low speed luminance accumulation value and the low speed luminance peak value in the picture divisions 54 showing the low speed luminance accumulation value.

The area extracted as the area in which the low speed luminance average value is at least 200 and the low speed luminance peak value is the maximum value of the 8-bit is an area common to the area surrounded by the broken line in FIG. 10A and the area surrounded by the broken line in FIG. 10B.

In FIG. 10C, the area in which the low speed luminance average value is at least 200 and the low speed luminance peak value is an area surrounded by a broken line. The area surrounded by the broken line in FIG. 10C is judged to be the saturated luminance area 89 and the remaining area is judged to be the unsaturated luminance area 90. The saturated luminance area 89 is handled as a subject of the image pickup using the high speed shutter.

After the low speed image signal has been classified into the saturated luminance area 89 and the unsaturated luminance area 90, a low speed luminance average value is calculated from the unsaturated luminance area of the luminance accumulation value in the low speed shutter image signal.

As for the high speed shutter image signal, a luminance average value of the high speed shutter image signal (hereinafter referred to as high speed luminance average value) is calculated from the saturated luminance area 89 of the luminance accumulation value in the high speed shutter image signal in the same way the low speed shutter image signal. FIG. 10D is a diagram showing calculation of the high speed luminance average value from the saturated luminance area 89 of the luminance accumulation value in the high speed shutter image signal.

The control signal generation means 87 includes calculation processing means 91 serving as computation means for calculating the shutter speed and the shutter speed ratio. The calculation processing means 91 includes a low speed shutter calculation processing section 92 for conducting processing on the luminance average value calculated from the low speed shutter image signal (hereinafter referred to as low speed luminance average value), and a high speed shutter calculation processing section 93 for conducting processing on the luminance average value calculated from the high speed shutter image signal (hereinafter referred to as high speed luminance average value). In order to obtain a suitable picked-up image for each of the low speed shutter image and the high speed shutter image, the electronic shutter circuit 49 and the AGC circuit 31 are controlled by the low speed shutter calculation processing section 92 and the high speed shutter calculation processing section 93. By thus varying the electronic shutter speed and the gain of the image signal, a suitable picked-up image is obtainable.

In addition to the calculation processing means 91, the control signal generation means 87 includes a characteristic conversion control signal generation section 95 for controlling the characteristic conversion of the image signal as characteristic conversion control signal generation means, and a combination ratio control signal generation section 96 for controlling an image combination ratio between two image signals as image combination ratio control signal generation means.

The low speed shutter calculation processing section 92 included in the calculation processing means 91 includes a low speed shutter speed control signal generation section 98 and a low speed AGC circuit control signal generation section 99 serving as automatic gain control signal generation means. The low speed shutter calculation processing section 92 generates a low speed shutter speed control signal and an AGC control signal.

The low speed shutter speed control signal generation section 98 generates a low speed shutter control signal for varying the electronic shutter speed of the CMOS sensor 28 shown in FIG. 1, on the basis of the low speed luminance average value input thereto. If the input low speed luminance average value exceeds a proper (most suitable or optimum) range, then the low speed shutter speed control signal generation section 98 varies the electronic shutter speed coarsely with a large width (hereinafter referred to as coarse adjustment). If the input low speed luminance average value is in a proper range, then the low speed shutter speed control signal generation section 98 varies finely the electronic shutter speed with a small width (hereinafter referred to as fine adjustment). In other words, the electronic shutter speed is adjusted in two steps. The low speed shutter control signal is generated so as to make the low speed luminance average value gradually approach the center of the proper range as a result of the control. The low speed shutter control signal thus generated is input to the electronic shutter circuit 49 to control the electronic shutter circuit 49.

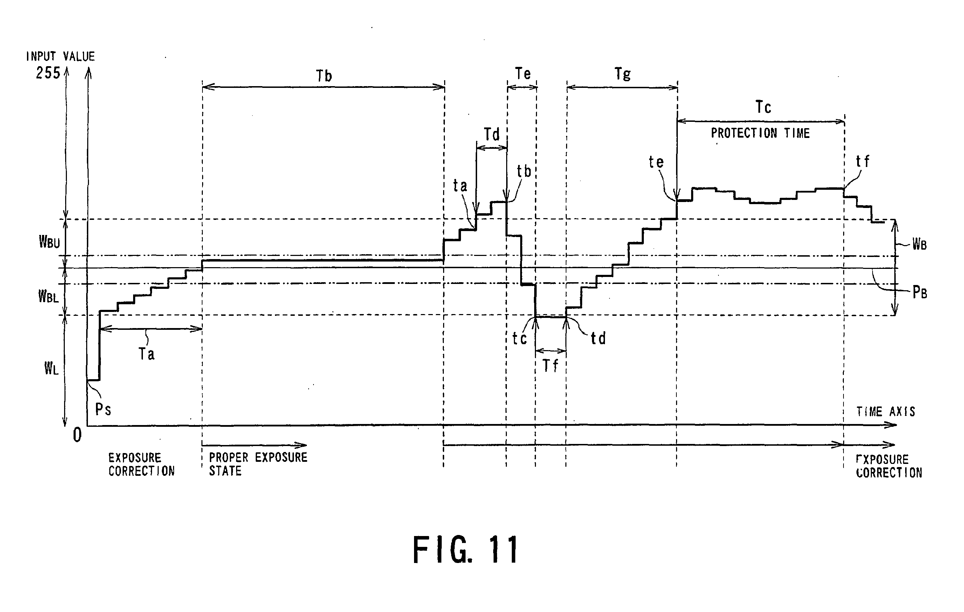

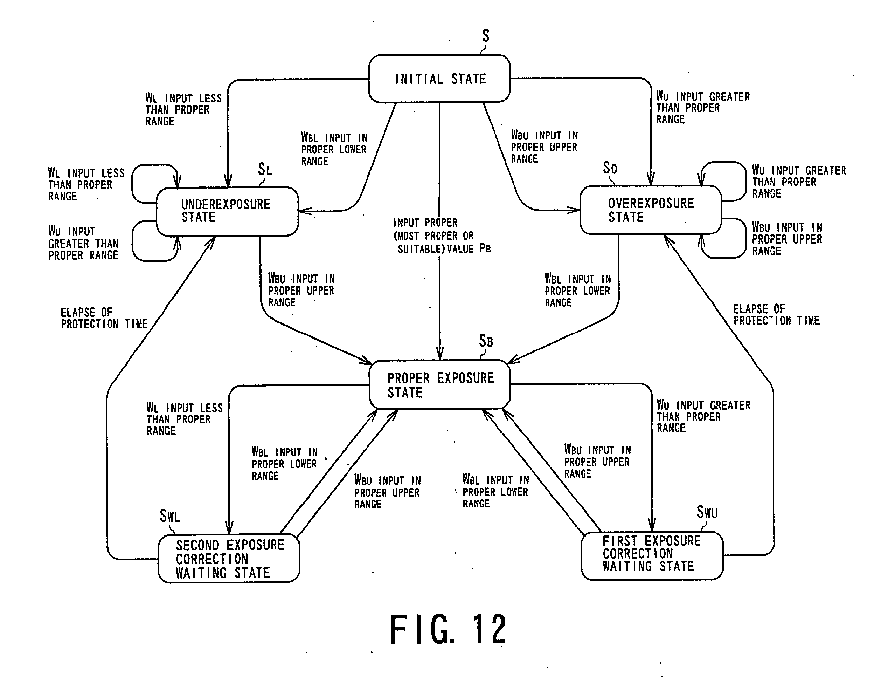

The control of the electronic shutter speed executed by the low speed shutter speed control signal generation section 98 will be described hereunder with reference to FIGS. 11 and 12.

FIG. 11 is an example of a graph showing a shift of the low speed luminance average value output from the luminance average value calculation means 86. In this graph, its ordinate indicates the low speed luminance average value output from the luminance average value calculation means 86, and its abscissa indicates a time axis. A stepwise changing waveform is a waveform indicating the low speed luminance average value.

In the example shown in FIG. 11, an initial value PS of the low speed luminance average value is below a proper (most suitable or optimum) luminance average value level width $W_B$. Therefore, the electronic shutter speed is made slow by (current electronic shutter speed) $\times$ (lower limit value of the proper luminance average value level $W_B$)/ (low speed luminance average value). The electronic shutter speed is made slow. After the low speed luminance average value has come into the proper luminance average value level width $W_B$, the shutter speed is made slow by 10% every vertical synchronization interval V until the low speed luminance average value exceeds a center of the proper luminance average value level width $W_B$. When the center of the proper luminance average value level width $W_B$ is exceeded, the alteration of the electronic shutter speed is stopped. A shutter speed alteration interval from the initial state to the alteration of the electronic shutter speed is stopped is denoted by Ta. Furthermore, the state in which the alteration of the shutter speed is stopped and the shift of the luminance level is stable is referred to as proper luminance level state interval Tb.

Once the low speed luminance average value comes in the proper luminance level state interval Tb, the low speed shutter speed control signal generation section 98 does not conduct correction on the shutter speed for a certain fixed frequency of time, unless a value outside the proper luminance level width $W_B$ continues to be observed even if a value outside the proper luminance level width $W_B$ is observed. The fixed time Tc is referred to as protection time.

In the example shown in FIG. 11, the low speed luminance average value varies and exceeds the proper luminance level width $W_B$ in intervals of Td and Tf. Since each of the intervals of Td and Tf during which the proper luminance level width $W_B$ exceeds is shorter than the protection time Tc, the shutter speed is not altered.

The low speed shutter speed control signal generation section 98 controls the electronic shutter speed of the CMOS sensor 28 shown in FIG. 1 in two steps. For a rapid change of the subject luminance value, therefore, the shutter speed can be changed quickly with the coarse adjustment. For a slow change of the subject luminance value, the shutter speed can be changed gently with the fine adjustment. For a change of the subject luminance value, therefore, the image pickup apparatus can always keep natural exposure. Furthermore, by providing the protection time Tc, oscillation in the low speed shutter speed control signal generation section 98 caused by a rapid luminance change of the subject can be prevented.

On the other hand, FIG. 12 is a state transition diagram of the electronic shutter in the CMOS sensor 28 included in the image pickup means 21. In this state transition diagram, there are six defined electronic shutter states of the CMOS sensor 28. When the low speed shutter speed control signal is generated, the electronic shutter is always in one of the six states. Each of arrows between the states indicates a state transition.

The low speed shutter speed control signal generation section 98 generates the low speed shutter speed control signal according to the luminance level of the low speed luminance average value input from the luminance average value calculation means 86 every vertical synchronization interval V. By controlling the electronic shutter circuit 49 according to the generated control signal, the exposure state of the electronic shutter is made to effect a transition from the current state to a direction of an outward arrow. The exposure state of the electronic shutter effects a transition in a direction in which a low speed luminance level range indicated by an arrow coincides with a low speed luminance level range of the input low speed luminance average value. By repeating the above-described processing operation every vertical synchronization interval V, the generation of the low speed shutter speed control signal is suitably conducted.

The state transition diagram shown in FIG. 12 will be described by taking the shift of the low speed luminance average value shown in FIG. 11 as an example.

In FIG. 12, six states according to the state of the low speed luminance average value are defined and shown. The six defined states are broadly classified into one state indicating an initial state immediately after an input is supplied from the luminance average value calculation means 86 (hereinafter referred to as initial state S), three states indicating the condition of exposure, and two exposure correction waiting states within the protection time.

Three states indicating the condition of exposure are an overexposure state $S_O$, an underexposure state $S_L$, and a proper exposure state $S_B$. Herein, the underexposure state $S_L$ means a state in which the luminance level is lower than the proper range and the time during which the CMOS sensor 28 is exposed is shorter than the proper time, i.e., a state in which the shutter speed is too fast to obtain the proper pickup image. The proper exposure state means a state in which the luminance level is in the proper range and the time during which the CMOS sensor 28 is exposed is suitable, i.e., a state in which the shutter speed is proper. Further, the overexposure state So means a state in which the luminance level is higher than the proper range and the time during which the CMOS sensor 28 is exposed is longer than the proper time, i.e., a state in which the shutter speed is too slow to obtain the proper pickup image.

In the two states indicating the exposure correction waiting states, there are a first exposure correction waiting state $S_{WU}$ and a second exposure correction waiting state $S_{WL}$. Herein, the first exposure correction waiting state $S_{WU}$ means an exposure correction waiting state in which the input low speed luminance average value shifts from the proper exposure state $S_B$ and exceeds the upper limit value of the proper range of the proper luminance average value level width $W_B$, i.e., overexposure is caused and protection time counting is being conducted.

The state transition is conducted by inputting the low speed luminance average value to the low speed shutter speed control signal generation section 98. As for events serving as triggers for the state transition, there are five kinds according to the luminance level range of the input low speed luminance average value, and one kind concerning the exposure correction waiting state. In other words, there are a total of six kinds. If any of these events occurs in the low speed shutter speed control signal generation section 98, then the exposure state of the electronic shutter effects a transition.

Events occurring according to the luminance level range of the input low speed luminance average value are classified into three events concerning the proper range $W_B$, and two events concerning a range W other than the proper range $W_B$ (hereafter referred to as outside of the proper range). Three events concerning the proper range $W_B$ are an optimum value $P_B$ input, a proper upper range $W_{BU}$ input, and a proper lower range $W_{BL}$ input. On the other hand, as for the outside W of the proper range, there are two inputs, i.e., an input in a range $W_U$ of the luminance level between an upper limit value of the proper range and a maximum value (hereinafter referred to as an input $W_U$ higher than the proper range), and an input in a range $W_L$ of the luminance level between a lower limit value of the proper range and a minimum value (hereinafter referred to as an input $W_L$ less than the proper range).

As for the event concerning the exposure correction waiting state, there is an event of protection time elapse, which is generated when the protection time has elapsed from the exposure correction waiting state.

In FIG. 12, an initial state of the low speed shutter calculation processing section 92 is an initial state S. Events that can occur in the initial state S are the input $W_L$ less than the proper range, the proper lower range $W_{BL}$ input, the optimum value $P_B$ input, the proper upper range $W_{BU}$ input, and the input $W_U$ higher than the proper range.

In FIG. 11, the low speed luminance average value (initial value) input from the luminance average value calculation means 86 is in $W_L$ less than the proper range. Therefore, an event to be executed becomes the input $W_L$ less than the proper range, and the exposure state of the electronic shutter effects a transition to the underexposure state $S_L$.

There are the following three events that can occur in the underexposure state $S_L$.

1. In the case of the input $W_L$ less than the proper range, the state remains in the underexposure state $S_L$ and any state transition is not effected. At this time, the electronic shutter speed is adjusted coarsely.
2. In the case of the proper lower range $W_{BL}$ input, the state remains in the underexposure state $S_L$, and any state transition from the underexposure state $S_L$ is not effected. At this time, the electronic shutter speed is adjusted finely.
3. In the case of the optimum value $P_B$ input, a transition from the underexposure state $S_L$ to the proper exposure state $S_B$ is effected.

In the electronic shutter speed alteration interval Ta, the event is the proper lower range $W_{BL}$ input. Therefore, the event corresponding to the above item 2 occurs. In other words, the electronic shutter speed is adjusted finely.

If the fine adjustment is repeated and the event changes from the proper lower range $W_{BL}$ input to the proper upper range $W_{BU}$ input, then a transition in the exposure state of the electronic shutter from the underexposure state $S_L$ to the proper exposure state $S_B$ is effected according to an arrow that indicates this event.

Events subjected to processing in the proper exposure state $S_B$ are the following two events.

1. If the event is the input $W_U$ higher than the proper range, then a protection time counter is reset, and a transition in the exposure state of the electronic shutter to the first protection time waiting state $S_{WU}$ is effected.
2. If the event is the input $W_L$ less than the proper range, then the protection time counter is reset, and a transition in the exposure state of the electronic shutter to the second protection time waiting state $S_{WL}$ is effected.

If the input low speed luminance average value comes in the $W_U$ higher than the proper range, then the protection time counter is reset, and counting in the protection time counter is started. Then a transition in the exposure state of the electronic shutter from the proper exposure state $S_B$ to the first protection time waiting state $S_{WU}$ is effected.

Events subjected to processing in the first protection time correction waiting state $S_{WU}$ are the following three events.

1. If the event is the proper upper range $W_{BU}$ input, then the protection time counter is reset, and a transition to the proper exposure state $S_B$ is effected.
2. If the event is the proper lower range $W_{BL}$ input, then the protection time counter is reset, and a transition to the proper exposure state $S_B$ is effected.
3. If the event is elapse of the protection time Tc, then a transition to the overexposure state $S_O$ is effected.

In an interval after the proper luminance level state interval Tb shown in FIG. 11, a transition from the proper exposure state $S_B$ to the first protection time correction waiting state $S_{WU}$ is caused at time ta when the low speed luminance average value comes in the $W_U$ higher than the proper range. In an interval Td between the time ta when the low speed luminance average value comes in the $W_U$ higher than the proper range and time tb when the low speed luminance average value returns to the proper luminance level width $W_B$, the first protection time correction waiting state $S_{WU}$ is maintained.

The first protection time correction waiting state $S_{WU}$ continues for the interval Td (where Td is shorter than the protection time Tc). At the time tb when the low speed luminance average value input to the low speed shutter speed control signal generation section 98 falls and returns to the proper luminance level width $W_B$, the event becomes the proper upper range $W_{BU}$ input, the protection time counter is reset, and a transition to the proper exposure state $S_B$ is effected. In an interval Te between the time tb when the return to the proper luminance level width $W_B$ is effected and time tc when the input $W_L$ less than the proper range is reached, the proper exposure state $S_B$ is maintained.

At the time tc when the input low speed luminance average value further falls and the low speed luminance average value comes in the input $W_L$ less than the proper range, the event becomes the input $W_L$ less than the proper range, and the protection time counter is reset and starts to count, and a transition to the second protection time waiting state $S_{WL}$ is effected. In an interval Tf between the time tc when the low speed luminance average value comes in the input $W_L$ less than the proper range and the time td when it returns to the proper luminance level width $W_B$, the second protection time waiting state $S_{WL}$ is maintained.

The second protection time waiting state $S_{WL}$ continues over an interval Tf (where Tf is shorter than the protection time Tc). At the time td when the low speed luminance average value input to the low speed shutter speed control signal generation section 98 then rises and returns to the proper luminance level width $W_B$, the event becomes the proper lower range $W_{BL}$ input, the protection time counter is reset, and a transition to the proper exposure state $S_B$ is effected. In an interval Tg between the time td when the return to the proper luminance level width $W_B$ is effected and the time te when the input $W_U$ higher than the proper range is reached, the proper exposure state $S_B$ is maintained.

At the time te when the input low speed luminance average value further rises and the low speed luminance average value comes in the $W_U$ higher than the proper range, the event becomes the input $W_U$ higher than the proper range, and the protection time counter is reset and starts to count, and a transition to the first protection time waiting state $S_{WU}$ is effected. From the time te when the input low speed luminance average value has come in the $W_U$ higher than the proper range, the time set in the protection time counter, i.e., the protection time Tc elapses with the input $W_U$ higher than the proper range maintained. At the time tf when the protection time Tc has elapsed, the event becomes the elapse of the protection time Tc and a transition to the overexposure state $S_O$ is effected.

Thereafter, in the overexposure state $S_O$, the operation of changing the shutter speed in a direction opposite to the underexposure state $S_L$ is conducted. Finally, the proper exposure state $S_B$ is attained.

On the other hand, the low speed AGC circuit control signal generation section 99 generates the AGC control signal for controlling the AGC circuit 31 shown in FIG. 1. The generated AGC control signal is transmitted to the AGC circuit 31 to control the AGC circuit 31.

The low speed shutter calculation processing section 92 includes a low speed shutter fine adjustment processing section 100 for conducting fine adjustment on the electronic shutter speed according to a minute change of brightness and effects the controlling on the low speed electronic shutter speed control signal.

The low speed shutter fine adjustment processing section 100 conducts processing for compensating a picture luminance variation of a long frequency. If the luminance variation of an illumination light source, such as the frequency of fluorescent lamp flicker is extremely close to the frame frequency of the CMOS sensor 28 with a natural number times, then a picture luminance variation of an extremely long frequency is caused by aliasing distortion. This picture luminance variation is detected by the low speed shutter fine adjustment processing section 100, and the processing is conducted so as to suppress the variation.

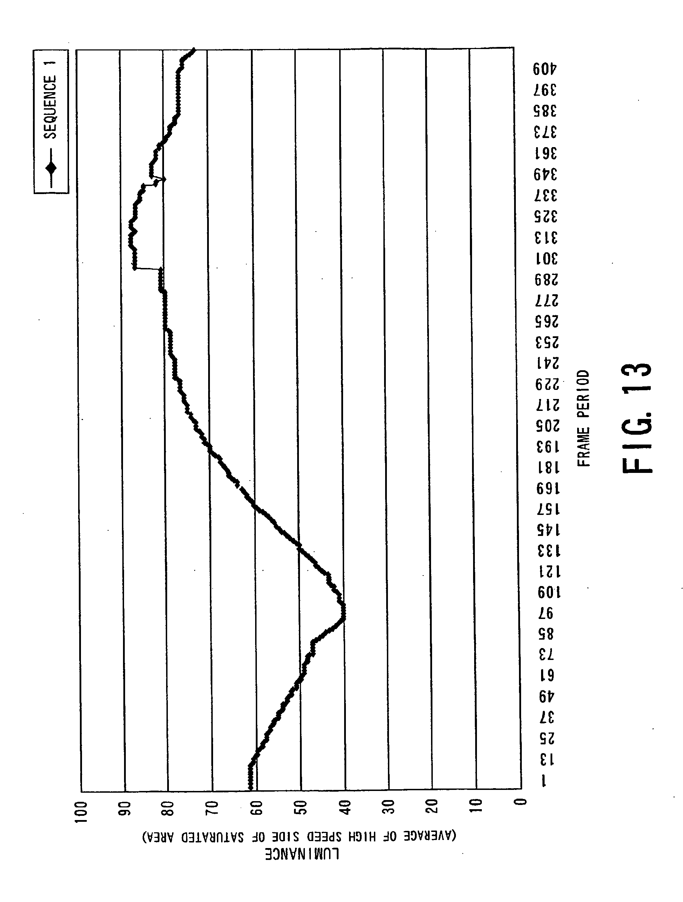

FIG. 13 shows an example of a graph obtained by measuring a luminance variation caused by a relation between an illumination light source and the frame frequency of the CMOS sensor 28. The ordinate of the graph indicates the low speed luminance average value input from the low speed shutter speed control signal generation section 98, and the abscissa of the graph indicates the frame frequency (time axis). According to FIG. 13, the luminance variation waveform caused by the relation to the frame frequency of the CMOS sensor 28 provides a gentle inclination. However, the amplitude of the luminance variation waveform is as large as approximately 30%. In some cases, therefore, the luminance level of the low speed luminance average value is made to come in the outside W of the proper range by a luminance variation caused according to the relation between the illumination light source and the CMOS sensor 28.

If the low speed luminance average value comes in the outside W of the proper range in the case where only the control on the electronic shutter circuit 49 is conducted by the low speed shutter speed control signal generated by the low speed shutter speed control signal generation section 98, then the electronic shutter of the CMOS sensor 28 is controlled after the elapse of the protection time Tc so as to set it to the proper exposure state $S_B$. As for the exposure, the low speed luminance average value rises and falls, and in the upper part and the lower part, the electronic shutter speed is changed and set to the proper exposure state $S_B$. As a result, the picture causes oscillation of an extremely long frequency.

Improvement on the picture luminance variation of a long frequency is executed by using the following method.

A gentle picture luminance variation that is, for example, less than $\pm 1\%$ in each frame frequency is detected. Then, the proper exposure state $S_B$ is attained every frame by minute electronic shutter control. In regard to the gentle picture luminance variation, the adjustment is effected to attain the proper exposure state $S_B$ without providing the protection time Tc.

The fine adjustment processing for the gentle picture luminance variation executed by the low speed shutter fine adjustment processing section 100 will be described hereunder in detail.

Operation of the fine adjustment processing, which is executed by the low speed shutter fine adjustment processing section 100, is conducted only in the case where the low speed shutter calculation processing section 92 judges the state to be the proper exposure state $S_B$. In the fine adjustment processing operation, the low speed shutter calculation processing section 92 stores the low speed luminance average value of the proper exposure state $S_B$ in the proper exposure state $S_B$ and sets the initial value equal to the stored low speed luminance average value.

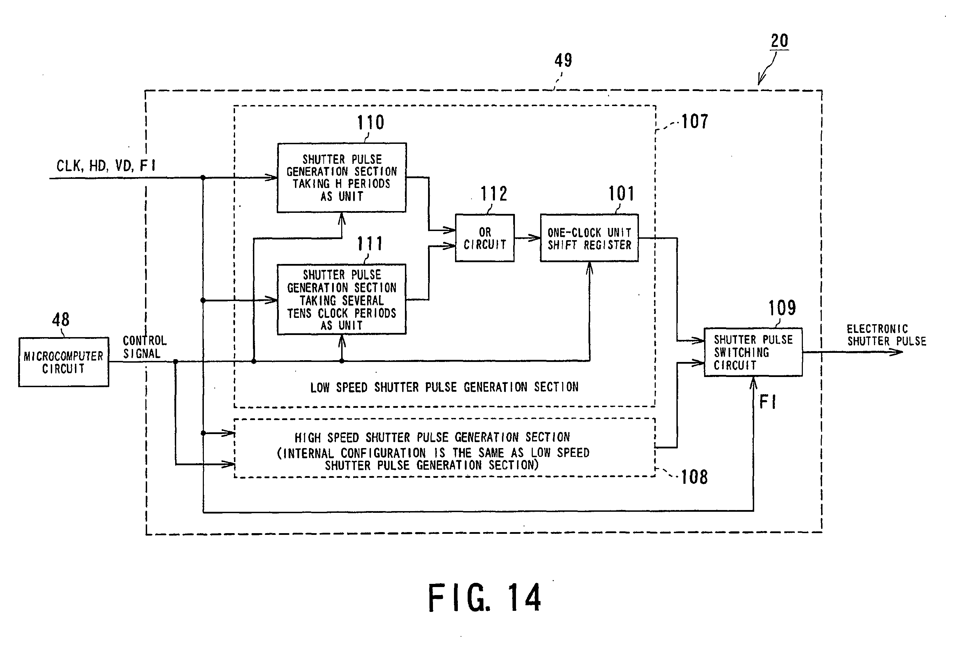

If the low speed luminance average value has varied within a range of $\pm 1\%$ in one frame frequency as compared to the initial value, a ratio (initial value)/(average value) is obtained. On the basis of the ratio (initial value)/(average value), the low speed shutter calculation processing section 92 calculates a number of stages in a one-clock unit shift register 101 included in the electronic shutter circuit 49 shown in FIG. 14 that should be shifted in order to attain an exposure correction time $\Delta t$, which is equal to "a"% of the exposure time and thus attain the proper exposure state $S_B$.

As for the calculation of the number of shift register stages in the one-clock unit shift register 101 for attaining the proper exposure state $S_B$, the microcomputer circuit 48 itself recognizes the current shutter speed. Therefore, the exposure correction time $\Delta t$ corresponding to "a"% of the exposure time is represented as

$$\text{(Equation 1)}$$

$$\texttt{Exposure correction time } \Delta t \texttt{ (seconds) = Current shutter speed}$$

$$\texttt{(seconds)} \times \texttt{"a"/100.}$$

For example, the exposure correction time $\Delta t$ corresponding to 1% of the exposure time becomes

$$\text{(Equation 2)}$$

$$\texttt{Exposure correction time } \Delta t1 \texttt{ (seconds) = Current shutter speed}$$

$$\texttt{(seconds)} \times \texttt{1/100.}$$

The number of shift register stages in the one-clock unit shift register 101 for conducting the exposure correction is represented as

$$\text{(Equation 3)}$$

$$\texttt{Number of shift register stages = Exposure correction time } \Delta t$$

$$\texttt{(seconds)/One frequency (seconds) of master clock.}$$

By using the calculated number of shift register stages as a control signal supplied to the one-clock unit shift register 101 include in the electronic shutter circuit 49, extremely minute exposure time adjustment becomes possible and the exposure time adjustment of $\pm 1\%$ with one frame frequency taken as the unit can be implemented.

The fine adjustment processing executed by the low speed shutter fine adjustment processing section 100 can also be applied by using the AGC (automatic gain control) of the CCD sensor output signal. Considering the signal-to-noise ratio, however, noise caused by an increase of the amplification factor is less when the above described scheme is applied.

In the same way as the low speed shutter calculation processing section 92, the high speed shutter calculation processing section 93 includes a high speed shutter speed control signal generation section 103, a high speed AGC circuit control signal generation section 104 and a high speed shutter fine adjustment processing section 105. Except that the input signal is a high speed luminance average value, processing operation of the high speed shutter calculation processing section 93 is the same as that of the low speed shutter calculation processing section 92.

The low speed shutter speed control signal and the high speed shutter speed control signal respectively generated by the low speed shutter calculation processing section 92 and the high speed shutter calculation processing section 93 are input to the characteristic conversion control signal generation section 95. The characteristic conversion control signal generation section 95 generates a characteristic conversion control signal. If the low speed shutter speed control signal is input to the characteristic conversion control signal generation section 95, a low speed characteristic conversion control signal for controlling the low speed shutter characteristic conversion circuit 41 shown in FIG. 1 is obtained.

On the other hand, if the high speed shutter speed control signal is input, then a high speed characteristic conversion control signal for controlling the high speed shutter characteristic conversion circuit 45 shown in FIG. 1 is obtained. The low speed characteristic conversion control signal and the high speed characteristic conversion control signal thus generated are transmitted to the low speed shutter characteristic conversion circuit 41 and the high speed shutter characteristic conversion circuit 45, respectively.

The low speed characteristic conversion control signal and the high speed characteristic conversion control signal are control signals for optimizing an image obtained by combination when combining the low speed shutter image and the high speed shutter image and constructing a dynamic range expansion image. The low speed characteristic conversion control signal and the high speed characteristic conversion control signal are used to control the low speed shutter characteristic conversion circuit 41 and the high speed shutter characteristic conversion circuit 45, respectively.

As a problem caused at the time of image combination, there is a problem that simple addition of two images causes an increase in expansion factor, non-linear distortion in the gradation characteristic of the combined picture, and an image of poor contrast. Before adding the two images, therefore, it is attempted to convert the characteristic of the image signal according to the dynamic range expansion factor, suppress the non-linear distortion and improve the contrast falling.

Characteristic conversion control of the low speed shutter characteristic conversion circuit 41 and the high speed shutter characteristic conversion circuit 45 will be then described hereunder.

First, the dynamic range expansion factor is computed according to the following equation.

$$\texttt{Dynamic range expansion factor = Low speed shutter control}$$

$$\texttt{signal/high speed shutter control signal.}$$

The dynamic range expansion factor thus computed is a dynamic range expansion factor at the time when the exposure control is completed.

The value of the dynamic range expansion factor is computed by the calculation processing means 91 serving as the computation means for the characteristic conversion control signal generation section 95. A result of the computation is output as the low speed characteristic conversion control signal and the high speed characteristic conversion control signal.

The low speed shutter characteristic conversion circuit 41 and the high speed shutter characteristic conversion circuit 45 has tables of $X^1$ to $X^{0.7}$ and $\log_{10} 1$ to 10 as a characteristic of X (input) - Y (output). The low speed shutter characteristic conversion circuit 41 and the high speed shutter characteristic conversion circuit 45 switch tables according to the dynamic range expansion factor, and effects improvement on the nonlinear distortion of the image signal. The relation of table selection to the dynamic range expansion factor is as follows.

If dynamic range expansion factor < 16, then table of $X^1$ is selected.

If $16 \leq$ dynamic range expansion factor, then table of $X^{0.7}$ is selected.

If $64 \leq$ dynamic range expansion factor, then table of $X^1$ is selected.

The characteristic conversion control signal generation section 95 generates a result of this conditional branch as the low speed characteristic conversion control signal and the high speed characteristic conversion control signal. The table switching in the low speed shutter characteristic conversion circuit 41 and the high speed shutter characteristic conversion circuit 45 is conducted through automatic control operation.

The combination ratio control signal generation section 96 generates the combination ratio control signal for controlling the combination ratio of the low speed shutter image signal and the high speed shutter image signal. The combination ratio control signal thus generated is transmitted to the addition circuit serving as the image combination means shown in FIG. 1.

In the same way as the characteristic conversion control, the purpose of the combination ratio control is to optimize the combination of the low speed shutter image and the high speed shutter image and heighten the contrast of the image obtained by the combination. As a problem caused at a time of combining the images, the increasing of the dynamic range expansion factor will cause a white floating image and contrast degradation becomes significant.

The contrast degradation is caused because most of the low speed shutter image becomes the saturated area, and the signal of the high speed shutter image is superposed on the saturated signal. In order to improve the degradation of the contrast, it is attempted to correct the contrast degradation by increasing the combination ratio of the high speed shutter image as the expansion factor increases and thereby suppressing the white floating of the image. Especially for improving the contrast of the image obtained by combination, conducting the combination ratio control simultaneously with the characteristic conversion control is highly effective.

In the same way as the characteristic conversion control signal generation section 95, the combination ratio control signal generation section 96 calculates the dynamic range expansion factor and generates a combination ratio control signal for switching the image combination ratio of the low speed shutter and high speed shutter on the basis of the calculation result. The combination ratio control signal thus obtained is sent to the addition circuit 34 serving as the image signal combination means shown in FIG. 1 in order to conduct automatic control on the combination distribution, i.e., the combination ratio between two frames of the image.

The relation between the dynamic range expansion factor and the combination ratio control is as follows:

When dynamic range expansion factor = 1, L is 100% and H is 0%;
When 1 < dynamic range expansion factor < 6, L is 94% and H is 6%;
When 6 ≤ dynamic range expansion factor ≤ 8, L is 88% and H is 12%; and
When 8 < dynamic range expansion, L is 75% and H is 25%,

where L denotes low speed shutter image and H denotes high speed shutter image.

However, the above described combination ratios are an example, and they may be changed as occasion demands.

A circuit block diagram of the electronic shutter circuit 49 is shown in FIG. 14. The electronic shutter circuit 49 shown in FIG. 14 includes low speed shutter pulse generation means 107, high speed shutter pulse generation means 108 and a shutter pulse switching circuit 109.

The low speed shutter speed control signal, the CLK pulse, the HD pulse, the VD pulse, and field information (hereinafter referred to as FI) are input to the electronic shutter circuit 49.

The low speed shutter speed control signal, the CLK pulse, the HD pulse, the VD pulse, and the FI input to the electronic shutter circuit 49 are input to the low speed shutter pulse generation means 107. The low speed shutter pulse generation means 107 generates a low speed shutter pulse for releasing the electronic shutter of the low speed side. The high speed shutter speed control signal, the CLK pulse, the HD pulse, the VD pulse, and the FI input to the electronic shutter circuit 49 are input to the high speed shutter pulse generation means 108. The high speed shutter pulse generation means 108 generates a high speed shutter pulse for releasing the electronic shutter of the high speed side.

The low speed shutter pulse and the high speed shutter pulse thus generated are input to the shutter pulse switching circuit 109. The FI is also input to the shutter pulse switching circuit 109. The low speed shutter pulse and the high speed shutter pulse are switched according to information contents of the FI. The switching of the shutter pulse is conducted on the basis of the information of the FI. The shutter pulse switching circuit 109 outputs the low speed shutter pulse when picking up an image at the low speed shutter speed and outputs the high speed shutter pulse when picking up an image at the high speed shutter speed. The shutter pulse output from the shutter pulse switching circuit 109 is input to the image pickup means 21 to control the electronic shutter of the CMOS sensor 28 included in the image pickup means 21.

The low speed shutter pulse generation means 107 includes a shutter pulse generation section taking the horizontal synchronization interval H as the unit (hereinafter referred to as shutter pulse generation section of H frequency unit) 110, a shutter pulse generation section 111 of several tens CLOCK frequency unit, an OR circuit 112, and a one-CLOCK unit shift register 101. The shutter pulse generated while taking the horizontal synchronization interval H as the unit by the shutter pulse generation section 111 of H frequency unit and the shutter pulse while taking several tens CLOCK frequencies as the unit by the shutter pulse generation section 111 of several tens CLOCK frequency unit are multiplexed by the OR circuit 112 and input to the one-CLOCK unit shift register 101. The one-CLOCK unit shift register 101 conducts fine adjustment on the exposure time by taking the CLOCK as the unit. A shutter pulse is obtained by giving a delay in the one-CLOCK unit shift register 101. The delay value is controlled by the control signal input from the microcomputer circuit 48, i.e., the number of shift register stages.

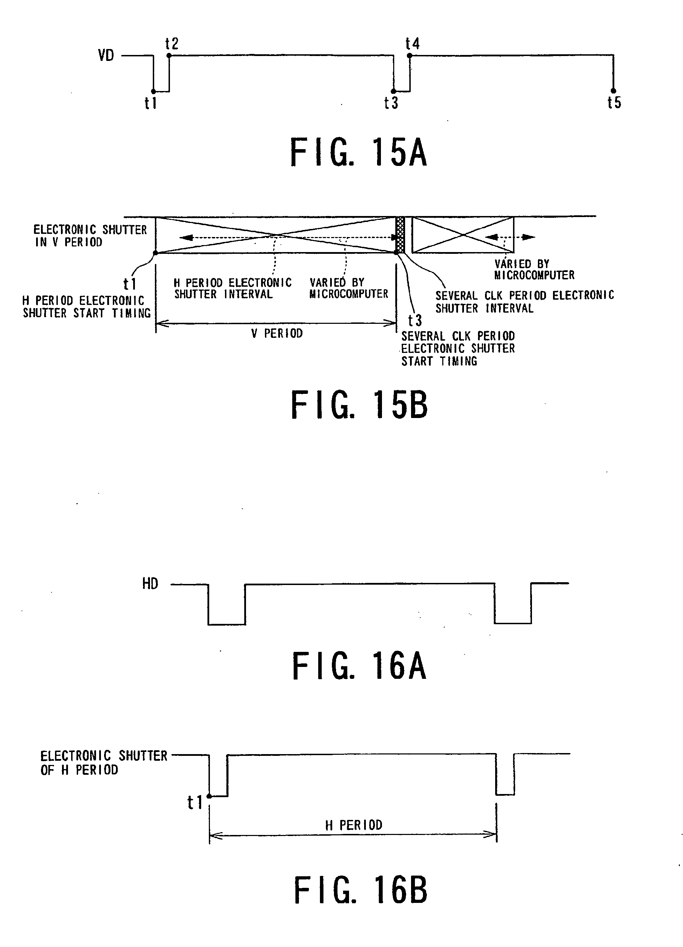

Generation timing of the electronic shutter pulse and the electronic shutter pulse time will now be described with reference to FIGS. 15 to 18.

FIG. 15A shows the VD pulse, and FIG. 15B shows an example of the electronic shutter pulse seen in a time scale of a frequency of the VD pulse (hereinafter referred to as V frequency) shown in FIG. 15A.

The electronic shutter pulse is generated immediately after an electric charge readout pulse (not illustrated) is input. This electronic shutter pulse generation timing is the same as that of a conventional TV camera. In other words, the electronic shutter pulse is generated at the time t1 and time t3 shown in FIG. 15. In the example of the electronic shutter pulse shown in FIG. 15B, an electronic shutter pulse taking a frequency of the HD pulse (hereinafter referred to as H frequency) as the unit is generated at time t1, and an electronic shutter pulse taking natural number times of the CLOCK pulse frequency (hereafter referred to as several CLK frequencies), such as, for example, eight times of the CLOCK pulse frequency, as the unit is generated at the time t3.

The electronic shutter pulse time is a frequency of time corresponding to the pulse width of the electronic shutter pulse, and it is exposure time during which the CMOS sensor 28 is exposed to the image light of the subject. Adjustment of the electronic shutter pulse is conducted by using the VD pulse, the HD pulse and the CLOCK pulse. The electronic shutter pulse can be adjusted by taking the V frequency, the H frequency, and several CLK frequencies as the unit.

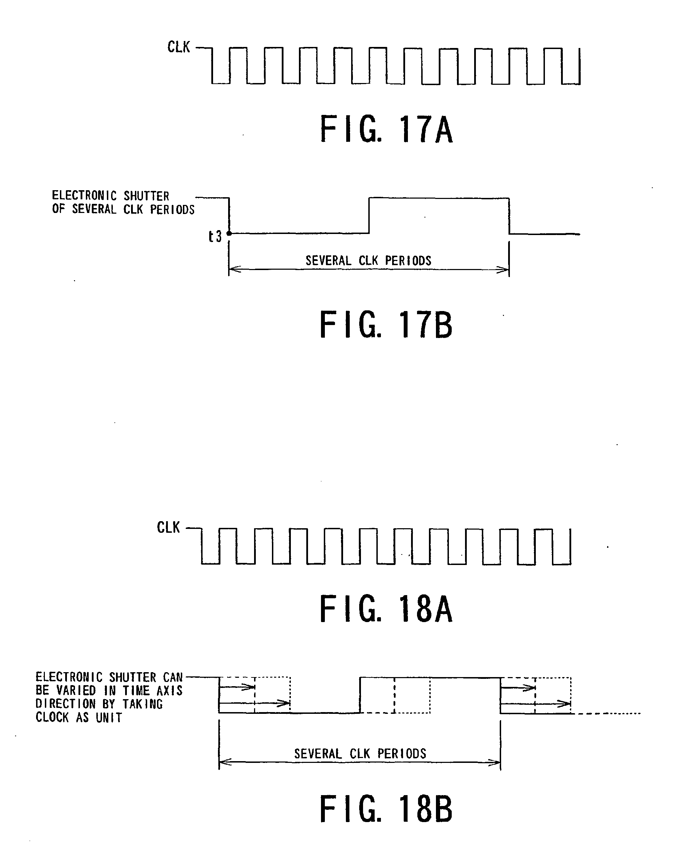

Diagrams showing adjustment of the electronic shutter pulse time conducted by using the HD pulse are shown in FIG. 16A and FIG. 16B. Diagrams showing adjustment of the electronic shutter pulse time conducted by using several CLK frequencies are shown in FIG. 17A and FIG. 17B.

FIG. 16A and FIG. 16B are expanded diagrams obtained by expanding a part of the V frequency in the electronic shutter pulse generation timing between the time t1 and the time t3 shown in FIG. 15B. FIG. 16A shows the HD pulse in the V frequency, and FIG. 16B shows the electronic shutter pulse seen in a time scale of the H frequencies shown in FIG. 16A. In the example of the electronic shutter pulse shown in FIG. 16B, an electronic shutter pulse having the H frequency is generated at the time t1.

FIG. 17A and FIG. 17B show fine pulses at the electronic pulse generation timing shown in FIG. 15B. FIG. 17A and FIG. 17B are expanded diagrams obtained by expanding a part of the V frequency between the time t3 and the time t5. FIG. 17A shows the CLOCK pulse in the V frequency, and FIG. 17B shows an electronic shutter pulse generated by taking several CLK frequencies as the unit. In the example of the electronic shutter pulse shown in FIG. 17B, an electronic shutter pulse taking several CLK frequencies as the unit is generated at the time t3.

The adjustment of the electronic shutter pulse time conducted by using the HD pulse is not limited to the electronic shutter pulse time of the H frequencies shown in FIG. 16B. In the V frequency between the time t1 when the first electronic shutter pulse is generated and the time t3, time adjustment can be conducted by taking the H frequency as the unit. On the other hand, the adjustment of the electronic shutter pulse time conducted by using several CLK pulses is not limited to the electronic shutter pulse of several CLK frequencies shown in FIG. 17B. In the V frequency between the time t3 when the first electronic shutter pulse has been generated and the time t5, the time adjustment can be conducted by taking several CLK frequencies as the unit.

Such an adjustment technique of the electronic shutter pulse time taking the H frequency as the unit or taking several CLK frequencies as the unit is an adjustment technique applied to the conventional CCD sensor camera. In the image pickup apparatus 20, the exposure time of the image can be adjusted by one CLOCK frequency as the unit and fine adjustment processing can be conducted by using only the electronic shutter speed adjustment. This fine adjustment processing is a feature of the image pickup apparatus 20.

FIG. 18 is a diagram showing adjustment of the exposure time conducted by shifting the electronic shutter pulse and taking one CLOCK frequency as the unit.

The electronic shutter pulse in the conventional image pickup apparatus is adjusted by taking the CLK frequency, natural number times, as the unit, and typically taking approximately seven to eight times of the CLK frequency as the unit. If one "shutter pulse of several CLK frequencies" is cut off immediately before the electric charge readout pulse, therefore, then the exposure time changes by approximately 50%, resulting in a coarse step.

On the other hand, the image pickup apparatus 20 can conduct fine adjustment processing in the low speed shutter fine adjustment processing section 100 and the high speed shutter fine adjustment processing section 105, shift the electronic shutter pulse while taking one CLOCK frequency as the unit, and adjust the exposure time while taking one CLOCK frequency as the unit. Therefore, the exposure time adjustment using the shutter pulse generated immediately before the electric charge readout pulse can be conducted by several %. It thus becomes possible to adjust the exposure time finely.

In the image pickup apparatus 20, fine adjustment of the exposure time is possible, and consequently, the luminance level of the image signal can be adjusted finely. By using only the exposure time adjustment of the electronic shutter, it becomes possible to conduct flicker correction on an image signal obtained by picking up an image of a high luminance part at an extremely fast electronic shutter speed. In other words, in the image pickup apparatus 20 realizing the wide dynamic range according to the present invention, it becomes possible to conduct flicker correction on the high speed shutter image signal by using only the electronic shutter.

The high speed shutter pulse generation means 108 operates in the same way as the low speed shutter pulse generation means 107. Since the high speed shutter pulse generation means 108 does not differ at all from the low speed shutter pulse generation means 107 in internal configuration mentioned before, and hence, the operation and description thereof will be omitted here.

In the image pickup apparatus 20 according to the first embodiment, the dynamic range expansion factor of the camera is varied at high speed according to the luminance difference in the subject, and a picked-up image optimized to the subject luminance difference is obtained. As a result, it is possible to provide an image pickup apparatus that is effective as a vehicle-mounted camera for image recognition that is extremely large in luminance difference of the subject, or a monitor or supervisory camera for simultaneously picking up images at indoor and night at outdoor.

In the image pickup apparatus 20 according to the first embodiment, the analog signal processing means 22 and the digital signal processing means 23, which serve as the image signal processing means, and the control means are integrated. As for the range of integration, various forms are possible. For example, the electronic shutter circuit 49, the low speed shutter memory circuit 39, the high speed shutter memory circuit 43, the low speed shutter switching circuit 40, the high speed shutter switching circuit 44, the low speed characteristic conversion circuit 41, the high speed characteristic conversion circuit 45, the addition circuit 34 serving as the image signal combination means, the luminance accumulation value circuit 50, the luminance peak value detection circuit 51, and the gate waveform generation circuit 52 may be formed as one integrated semiconductor chip. Of course, integration is not limited to the above described examples. In the case where integration is conducted, combination of components shown in FIG. 1 is arbitrary. The addition circuit 34 may be a switching circuit.

In the foregoing description of the first embodiment, an example in which the CMOS sensor 28 is used as the image pickup device has been described. Furthermore, in the case where a photoelectric device such as a CCD sensor is used as the image pickup device, it is possible in the present invention to vary the dynamic range expansion factor of the camera according to the luminance difference in the subject and obtain a picked-up image optimized to the luminance difference in the subject, in the same way.

[Second Embodiment]

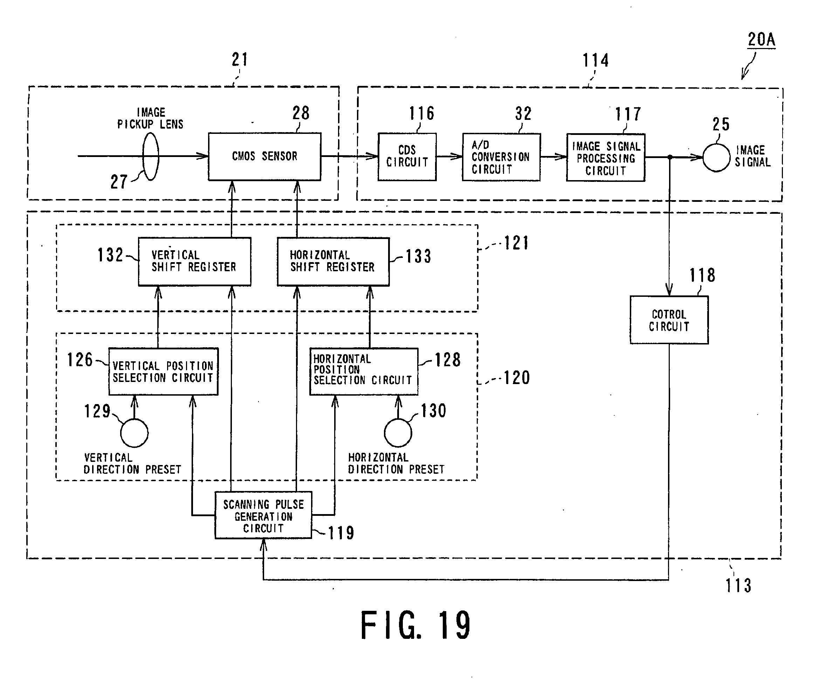

An image pickup apparatus 20A according to a second embodiment of the present invention is shown in FIG. 19. Except that an area selection and extraction means 113 for selecting and extracting an image information area having high importance from an image signal obtained by picking an image is provided, the image pickup apparatus 20A according to this second embodiment is approximately the same as the image pickup apparatus of the first embodiment. Therefore, only components different from those of the image pickup apparatus 20 of the first embodiment are demoted by reference numerals, and the components not different therefrom are denoted by the same reference numerals and description thereof is omitted herein.

As shown in FIG. 19, the image pickup device 20A includes the CMOS sensor 28 as the image pickup device, the image pickup means 21 for picking up an image, area selection and extraction means 113 for selecting and extracting an arbitrary area from a picture range in an image signal corresponding to one picture picked up by the image pickup means 21, and image signal output means 114 for conducting signal processing on an image signal of the area selected and extracted by the area selection and extraction means 113 and outputting a result of the signal processing.

An image signal corresponding to one picture is generated by the CMOS sensor serving as the image pickup device included in the image pickup means 21 of the image pickup apparatus 20A. An arbitrary area is selected and extracted from a picture range of the image signal corresponding to one picture by an area selection and extraction signal input to the CMOS sensor 28 from the area selection and extraction means 113. Furthermore, the CMOS sensor 28 outputs an image signal (hereinafter referred to as area selection and extraction image signal) obtained by selecting and extracting an arbitrary area from the generated image signal corresponding to one picture. The area selection and extraction image signal thus output is input to the image signal output means 114.

For the area selection and extraction image signal input to the image signal output means 114, noise superposed on this signal is removed by a correlation double sampling circuit (hereinafter referred to as CDS circuit) 116. The area selection and extraction image signal is subjected to A/D conversion in the A/D conversion circuit 32, and subjected to signal processing in an image signal processing circuit 117. The area selection and extraction image signal subjected to the signal processing in the image signal processing circuit 117 is output from the image signal output means 114 via the image signal output terminal 25 as an image signal output of the image pickup apparatus 20A. The area selection and extraction image signal subjected to signal processing in the image signal processing circuit 117 is also fed back to the area selection and extraction means 113 included in the image pickup apparatus 20A.

A feedback signal fed back to the area selection and extraction means 113 is input to a control circuit 118 to thereby generate a control signal for controlling a scanning pulse generation circuit 119. The control signal thus generated is input to the scanning pulse generation circuit 119 so as to control generation of a scanning pulse. The scanning pulse generated by the scanning pulse generation circuit 119 is input to area selection means 120 for selecting an area of the area selection and extraction image signal output by the CMOS sensor 28 serving as the image pickup device. Upon being triggered by the input scanning pulse, the area selection means 120 outputs area selection and extraction information. The area selection and extraction information thus output is input to an image pickup device drive circuit 121.

The scanning pulse generated by the scanning pulse generation circuit 119 is also input directly to the image pickup device drive circuit 121. The image pickup device drive circuit 121 generates a transfer pulse for driving the CMOS sensor 28, as the image pickup device, and an area selection and extraction signal, on the basis of the scanning pulse input thereto. The transfer pulse and the area selection and extraction signal thus generated are input to the CMOS sensor 28.

The image pickup apparatus 20A includes the CMOS sensor 28 serving as the image pickup device in order to remarkably shorten time required to read out electric charge stored in the image pickup device, i.e., read out the image signal. Furthermore, the image pickup apparatus 20A includes the area selection and extraction means 113 in order to shorten the image signal processing time in the image signal output means 114 included in the image pickup apparatus 20A shown in FIG. 19. In the image pickup apparatus 20A, it is attempted to shorten time required since image pickup until image signal output by shortening the time required to read out the image signal from the image pickup device and shortening the image signal processing time in the image signal output means 114.

In the case where high speed control is required, such as the case where a moving body detects an obstacle existing on its travel route and conducts control to avoid crash, the image pickup apparatus 20A becomes a more suitable image pickup apparatus than the image pickup apparatus 20 according to the first embodiment, because the time required from the image pickup to the image signal output is shortened. In other words, the image pickup apparatus 20A is an image pickup apparatus that is effective as an image pickup apparatus installed on a moving body for the purpose of acquiring control information.

First, the shortening effect of image signal readout time owing to the CMOS sensor 28 serving as the image pickup device in the image pickup apparatus 20A will be described.

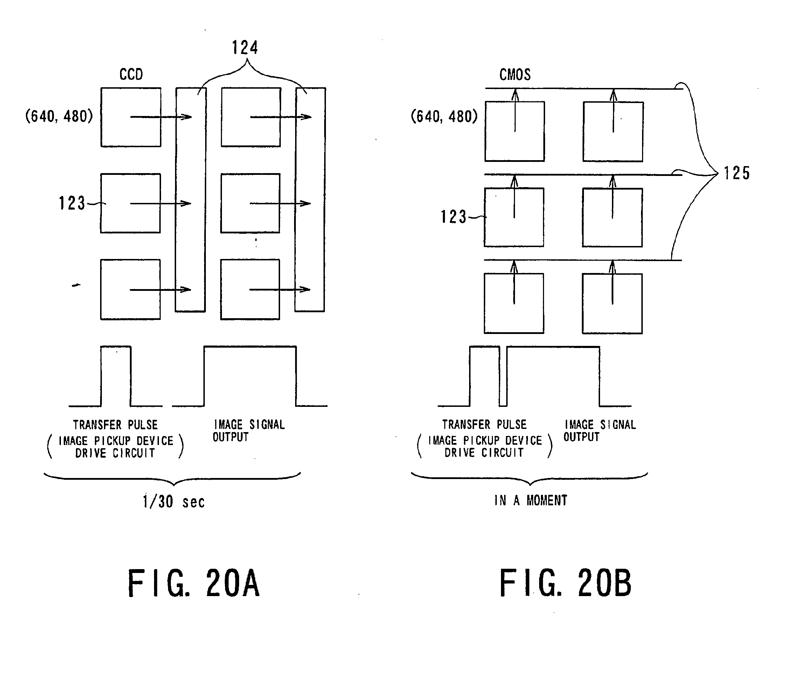

Comparing the CCD sensor having (640 x 480) pixels with the CMOS sensor 28, FIG. 20A and FIG. 20B show the readout time of the image signal from the CCD sensor and the CMOS sensor 28, i.e., readout time of electric charge stored in the CCD sensor and the CMOS sensor 28.

In the case of the CCD sensor shown in FIG. 20A, the time required to read out the stored electric charge is approximately 1/30 second. In other words, since the transfer pulse (image pickup device drive signal) is input until the stored electric charge is transferred from all pixels 123 to a vertical transfer section 124 and the stored electric charge transferred to the vertical transfer section 124 is successively read out, it takes approximately 1/30 second.

On the other hand, in the case of the CMOS sensor 28 shown in FIG. 20B, the stored electric charge of any pixel can be read out from an image signal readout line 125 almost instantaneously (in approximately 30 nsec) immediately after the transfer pulse (image pickup device drive signal) is input, because there are a plurality of transfer pulses in the CMOS sensor and timing differs according to pixel (device). By using the CMOS sensor 28 as the image pickup device, therefore, time for reading out the stored electric charge from the image pickup device can be remarkably shortened in the image pickup apparatus 20A.

Supposing that an image pickup apparatus is installed on a moving body such as a vehicle and the moving body is made to travel at a speed of 150 km per hour (at a speed of approximately 41.7 m per second), the image pickup apparatus 20 having the CCD sensor as the image pickup device will be compared herein with the image pickup apparatus 20A having the CMOS sensor 28 as the image pickup device.

In the image pickup apparatus 20, the vehicle travels by approximately 1.4 m when the readout time of the electric charge from the CCD sensor serving as the image pickup device, i.e., approximately 1/30 second has elapsed. In the image pickup apparatus 20A, however, the vehicle travels by approximately "0" m when the readout time of the electric charge from the CMOS sensor 28 serving as the image pickup device has elapsed.

In the case where each image pickup apparatus senses an obstacle existing ahead and conducts control to stop the moving body in order to avoid crash. Therefore, the moving body mounting the image pickup apparatus 20 travels by approximately 1.4 m until the control operation is conducted, whereas the moving body mounting the image pickup apparatus 20A travels by approximately "0" m until the control operation is conducted. If the travel speed of the moving body becomes higher, the difference in distance of travel during the stored electric charge readout time becomes more remarkable.

The area selection means 120 and the image pickup device drive circuit 121 included in the image pickup apparatus 20A shown in FIG. 19 will be described.

The area selection means 120 includes a vertical position selection circuit 127 for selecting a scanning range in the vertical direction and a horizontal position selection circuit 128 in the horizontal direction. Setting of the selection and extraction area of the image signal using the area selection means 120 is executed by previously inputting scanning range information in scanning the CMOS sensor 28 to the vertical position selection circuit 127 and the horizontal position selection circuit 128 in the horizontal direction from a vertical direction preset terminal 129 and a horizontal direction preset terminal 130.

For the area selection and extraction in the vertical direction, the scanning range information in scanning the CMOS sensor 28 is previously input to the vertical position selection circuit 127 from the vertical direction preset terminal 129. The scanning range information is supplied by inputting 0 or 1 to the vertical position selection circuit 127 every effective scanning line of the CMOS sensor in the vertical direction.

In addition to the scanning range information, the scanning pulse from the scanning pulse generation circuit 119 is input to the vertical position selection circuit 127. Upon being triggered by the input scanning pulse, the input information of "0" or "1" is input to the image pickup device drive circuit 121 for driving the CMOS sensor 28.

Furthermore, for the area selection and extraction in the horizontal direction as well, the scanning range in scanning the CMOS sensor 28 is input to the horizontal position selection circuit 128 from the horizontal direction preset terminal 130 in the form of "0" and "1", in the same way as the area selection and extraction in the vertical direction. Upon being triggered by the scanning pulse input from the scanning pulse generation circuit 119, the input information of "0" or "1" is input to the image pickup device drive circuit 121 for driving the CMOS sensor 28.

The image pickup device drive circuit 121 includes a vertical shift register 132 for scanning effective scanning lines in the vertical direction and a horizontal shift register 133 for scanning effective scanning lines in the horizontal direction. Upon being triggered by the scanning pulse from the scanning pulse generation circuit 119, the vertical shift register 132 generates a drive signal for driving the CMOS sensor 28 according to the scanning range information supplied from the vertical position selection circuit 127, i.e., "0" and "1" information. Upon being triggered by the scanning pulse from the scanning pulse generation circuit 119, the horizontal shift register 133 generates a drive signal (hereinafter referred to as CMOS sensor drive signal) for driving the CMOS sensor 28 according to the scanning range information supplied from the horizontal position selection circuit 128, i.e., "0" and "1" information.

The CMOS sensor drive signal generated by the vertical shift register 132 and the horizontal shift register 133 are transmitted to the CMOS sensor 28. The CMOS sensor 28 conducts selection and extraction on the image signal according to the CMOS sensor drive signal input thereto.

As for the selection and extraction of the image signal, extraction is conducted on the image signal by regarding effective scanning lines supplied with "1" in the scanning range information, as a scanning execution region. On the other hand, effective scanning lines supplied with "0" are regarded as a scanning unnecessary region and not subjected to the extraction of the image signal. In the same way as the image pickup apparatus 20 according to the first embodiment, the selected and extracted image signal is subjected to image signal processing in the signal processing means.

The image signal processing means included in the image pickup apparatus 20A is the same as that included in the image pickup apparatus 20 according to the first embodiment. The information is subjected to the image signal processing quickly because the image signal is selected and extracted and the information content is narrowed down. Furthermore, the image signal subjected to the image signal processing in the image signal processing means is output from the image signal output means 114.

FIG. 21 is a diagram showing an example in which the image pickup apparatus 20A is used as a camera installed on a vehicle. In the vehicle-mounted camera, a region ranging from a nearly central part to the top of the picture is the sky 135. Many subjects, such as a vehicle 136, a road 137, and white lines 138 on the road, are located in the lower part of the picture rather than the vicinity of the center of the picture. If in a camera installed on a vehicle, an area ranging from the vicinity of the central part of the picture to the lower part of the picture is set as a scanning execution region and the remaining part is set as a scanning non-execution region. Accordingly, an image of a highly important region including subjects, such as the vehicle 136, the road 137, and white lines 138 on the road, can be obtained quickly.

According to the image pickup apparatus of the second embodiment, the CMOS sensor 28 is used as the image pickup device, and consequently, it becomes possible to read out the image signal from the CMOS sensor 28 substantially in a moment after the photoelectric conversion. Furthermore, since the image pickup apparatus according to the second embodiment includes the area selection and extraction means 113, it becomes possible to select and extract a highly important area from the image signal and shorten the processing time required for signal processing.

In the image pickup apparatus 20A, therefore, the time required from the image pickup to the image signal output is shortened. In the case where the high speed control is required, such as the case where a moving body detects an obstacle existing on its travel route and conducts control so as to avoid crash, the image pickup apparatus 20A is effective as an image pickup apparatus installed on the moving body for the purpose of acquiring control information.

In the foregoing description, the moving body, on which the image pickup apparatus 20A according to the second embodiment is installed, has been supposed to be a vehicle. However, the moving body is not limited to a vehicle. The moving body on which the image pickup apparatus 20A is installed may be any moving body on which the image pickup apparatus 20A can be installed, such as a vehicle, a ship, an aeroplane or like.

According to the present invention mentioned above, since the image pickup apparatus fast varies the dynamic range expansion factor of the camera according to the luminance difference in the subject and obtains a picked-up image optimized to the luminance difference of the subject, it is also effective when picking up an image of a subject having an extremely large luminance difference.

In addition, it becomes possible to reduce the time required since image pickup until completion of image processing and conduct processing on the picked-up image signal at high speed, by using a CMOS sensor as the image pickup device included in the image pickup means of the image pickup apparatus, selecting and extracting a highly important area from an image pickup picture range, and thereby reducing the information content of the image signal subject to image signal processing. Therefore, the image pickup apparatus is also effective in an image pickup from a moving body in which the subject changes every moment.

It is further to be noted that the present invention is not limited to the described embodiments and many other changes and modifications may be made without departing from the scopes of the appended claims.

**EP 1 339 227 B1**

**Claims**

1. An image pickup apparatus having an image pickup device (21) to obtain a first image being exposed for a first period and a second image being exposed for a second period which is shorter than the first period, a controller (48, 49) to control the first period and the second period according to brightness of images, and a processor (33) for combining the first image and the second image into a third image, **characterized by** comprising:

   a dividing means (52) for dividing the first and second images from the CMOS sensor into a plurality of sub-areas (54); and
   a detecting means (50, 51) for detecting brightness information in each sub area of the first and second images;
   wherein the image pickup device includes a CMOS sensor (28) which outputs the first or second images in a predetermined frame period (D in Fig. 2), and
   wherein the controller (49) controls alternatively to read out one of the first and second images within the frame period, and further including:

   first means for determining a first period of the CMOS sensor to be exposed in a next frame period, using the brightness information obtained from the first image by the detecting means;
   second means for determining a second period, independently from the first means, of the CMOS sensor to be exposed in a successive frame period, using the brightness information obtained from the second image by the detecting means.

2. The apparatus according to claim 1, wherein the detecting means includes an accumulating means for accumulating luminance of sub-areas and detects average values in luminance of sub-areas in the first and second images respectively.

3. The apparatus according to claim 1, wherein the detecting means detects luminance peak values of sub-areas in the first and second images respectively.

4. The apparatus according to claim 1, wherein the first means of the controller determines the first period using brightness information of such sub-areas (90, Fig. 10) that are unsaturated in luminance of the first image.

5. The apparatus according to claim 1, wherein the second means of the controller determines the second period using brightness information of such sub-areas (89, Fig. 10) that are saturated in luminance of the second image.

6. The apparatus according to claim 1, wherein the first means of the controller determines the first period using brightness information of such sub-areas (90, Fig. 10) that are unsaturated in luminance of the first image, and the second means of the controller determines the second period using brightness information of such sub-areas (89, Fig. 10) that are saturated in luminance of the second image.

7. The apparatus according to claim 1, wherein the first means of the controller determines the first period using brightness information of such sub-areas (90) that have low luminance values of the first image, and the second means of the controller determines the second period using brightness information of such sub-area (89) that have high luminance values of the second image.

8. The apparatus according to claim 6, wherein the controller further including a means for shifting final generation timing of an electronic shutter so as to determine the first period and the second period, by taking one CLOCK of a timing generator as unit.

9. The apparatus according to claim 6, wherein the controller further including a selecting means (113) for selecting at least one of sub-area (54) of the first and second images.

10. The apparatus according to claim 6, wherein the image pickup device is installed on a vehicle.

11. The apparatus according to claim 10, wherein the combined image is used for detecting an obstacle close to the vehicle.

22

**Patentansprüche**

1. Bildaufnahmevorrichtung, enthaltend ein Bildaufnahmegerät (21) zum Gewinnen eines ersten Bilds, das mit einer ersten Zeitperiode belichtet wurde, und eines zweiten Bilds, das mit einer zweiten Zeitperiode belichtet wurde, die kürzer als die erste Zeitperiode ist, eine Steuerung (48, 49) zum Steuern der ersten Zeitperiode und der zweiten Zeitperiode gemäß einer Helligkeit der Bilder, und einen Prozessor (33) zum Kombinieren des ersten Bilds und des zweiten Bilds in ein drittes Bild, **gekennzeichnet durch**
ein Teilungsmittel (52) zum Teilen des ersten und des zweiten Bilds von dem CMOS Sensor in eine Mehrzahl von Nebenbereichen (54); und
ein Detektiermittel (50, 51) zum Detektieren von Helligkeitsinformation in jedem Nebenbereich des ersten und zweiten Bilds;
wobei das Bildaufnahmegerät einen CMOS Sensor (28) enthält, der das erste oder das zweite Bild in einer vorbestimmten Rahmenzeitperiode (D in Fig. 2) ausgibt, und
wobei die Steuerung (49) steuert zum abwechselnden Auslesen von einem von dem ersten und dem zweiten Bild innerhalb der Rahmenzeitperiode, und ferner enthaltend
ein erstes Mittel zum Bestimmen einer ersten Zeitperiode des CMOS Sensors zur Belichtung in einer nächsten Bildrahmenzeitperiode unter Verwendung der Helligkeitsinformation, die von dem ersten Bild **durch** das Detektiermittel gewonnen wird;
ein zweites Mittel zum Bestimmen einer zweiten Zeitperiode, unabhängig von dem ersten Mittel, des CMOS Sensors zur Belichtung in einer nachfolgenden Rahmenzeitperiode unter Verwendung der Helligkeitsinformation, die von dem zweiten Bild **durch** das Detektiermittel gewonnen wird.

2. Vorrichtung nach Anspruch 1, wobei das Detektiermittel ein Akkumuliermittel enthält zum Akkumulieren der Helligkeit der Nebenbereiche, und Helligkeitsdurchschnittswerte der Nebenbereiche in dem ersten und dem zweiten Bild jeweils detektiert.

3. Vorrichtung nach Anspruch 1, wobei das Detektiermittel Helligkeitsspitzenwerte der Nebenbereiche in dem ersten und zweiten Bild jeweils detektiert.

4. Vorrichtung nach Anspruch 1, wobei das erste Mittel der Steuerung die erste Zeitperiode unter Verwendung der Helligkeitsinformation derartiger Nebenbereiche (90, Fig. 10) bestimmt, die bezüglich der Helligkeit des ersten Bilds ungesättigt sind.

5. Vorrichtung nach Anspruch 1, wobei das zweite Mittel der Steuerung die zweite Zeitperiode unter Verwendung der Helligkeitsinformation derartiger Nebenbereiche (89, Fig. 10) bestimmt, die bezüglich der Helligkeit des zweiten Bilds gesättigt sind.

6. Vorrichtung nach Anspruch 1, wobei das erste Mittel der Steuerung die erste Zeitperiode unter Verwendung der Helligkeitsinformation derartiger Nebenbereiche (90, Fig. 10) bestimmt, die bezüglich der Helligkeit des ersten Bilds ungesättigt sind, und
das zweite Mittel der Steuerung die zweite Zeitperiode unter Verwendung der Helligkeitsinformation derartiger Nebenbereiche (89, Fig. 10) bestimmt, die bezüglich der Helligkeit des zweiten Bilds gesättigt sind.

7. Vorrichtung nach Anspruch 1, wobei das erste Mittel der Steuerung die erste Zeitperiode unter Verwendung der Helligkeitsinformation derartiger Nebenbereiche (90) bestimmt, die kleine Helligkeitswerte des ersten Bilds haben, und
das zweite Mittel der Steuerung die zweite Zeitperiode unter Verwendung der Helligkeitsinformation derartiger Nebenbereiche (89) bestimmt, die große Helligkeitswerte des zweiten Bilds haben.

8. Vorrichtung nach Anspruch 6, wobei die Steuerung ferner ein Mittel enthält zum Verschieben der Enderzeugungszeitsteuerung einer elektronischen Blende, um so die erste Zeitperiode und die zweite Zeitperiode zu bestimmen, indem ein TAKT eines Zeitsteuergenerators als Einheit genommen wird.

9. Vorrichtung nach Anspruch 6, wobei die Steuerung ferner ein Auswahlmittel (113) enthält zum Auswählen mindestens eines Nebenbereichs (54) des ersten und zweiten Bilds.

10. Vorrichtung nach Anspruch 6, wobei das Bildaufnahmegerät an einem Fahrzeug installiert ist.

**11.** Vorrichtung nach Anspruch 10, wobei das kombinierte Bild verwendet wird zum Detektieren eines Hindernisses, das nahe dem Fahrzeug ist.

**Revendications**

**1.** Appareil de prise de vue comportant un dispositif de prise de vue (21) pour obtenir une première image exposée pendant une première période et une deuxième image exposée pendant une deuxième période qui est plus courte que la première période, un contrôleur (48, 49) pour commander la première période et la deuxième période selon la luminosité des images, et un processeur (33) pour combiner la première image et la deuxième image en une troisième image, **caractérisé en ce qu'**il comprend :

des moyens de division (52) pour diviser les première et deuxième images provenant du capteur CMOS en une pluralité de zones secondaires (54) ; et

des moyens de détection (50, 51) pour détecter des informations de luminosité dans chaque zone secondaire des première et deuxième images ;

dans lequel le dispositif de prise de vue comprend un capteur CMOS (28) qui délivre la première ou deuxième image dans une période de trame prédéterminée (D sur la figure 2) ; et

dans lequel le contrôleur (49) commande en alternance la lecture des première et deuxième images à l'intérieur de la période de trame, et comprenant en outre :

des premiers moyens pour déterminer une première période du capteur CMOS à exposer dans une période de trame suivante, en utilisant les informations de luminosité obtenues à partir de la première image par les moyens de détection ;

des deuxièmes moyens pour déterminer une deuxième période, indépendamment des premiers moyens, du capteur CMOS à exposer dans une période de trame successive, en utilisant les informations de luminosité obtenues à partir de la deuxième image par les moyens de détection.

**2.** Appareil selon la revendication 1, dans lequel les moyens de détection comprennent des moyens de cumul pour cumuler la luminance de zones secondaires et détectent des valeurs moyennes de la luminance des zones secondaires sur les première et deuxième images, respectivement.

**3.** Appareil selon la revendication 1, dans lequel les moyens de détection détectent des valeurs maximales de la luminance des zones secondaires sur les première et deuxième images, respectivement.

**4.** Appareil selon la revendication 1, dans lequel les premiers moyens du contrôleur déterminent la première période en utilisant des informations de luminosité de celles des zones secondaires (90, figure 10) qui sont insaturées en luminance de la première image.

**5.** Appareil selon la revendication 1, dans lequel les deuxièmes moyens du contrôleur déterminent la deuxième période en utilisant des informations de luminosité de celles des zones secondaires (89, figure 10) qui sont saturées en luminance de la deuxième image.

**6.** Appareil selon la revendication 1, dans lequel les premiers moyens du contrôleur déterminent la première période en utilisant des informations de luminosité de celles des zones secondaires (90, figure 10) qui sont insaturées en luminance de la première image ; et
les deuxièmes moyens du contrôleur déterminent la deuxième période en utilisant des informations de luminosité de celles des zones secondaires (89, figure 10) qui sont saturées en luminance de la deuxième image.

**7.** Appareil selon la revendication 1, dans lequel les premiers moyens du contrôleur déterminent la première période en utilisant des informations de luminosité de celles des zones secondaires (90) qui ont des valeurs de faible luminance de la première image ; et
les deuxièmes moyens du contrôleur déterminent la deuxième période en utilisant des informations de luminosité de celles des zones secondaires (89) qui ont des valeurs de luminance élevée de la deuxième image.

**8.** Appareil selon la revendication 6, dans lequel le contrôleur comprend en outre des moyens pour décaler une synchronisation de génération finale d'un obturateur électronique de façon à déterminer la première période et la deuxième période, en prenant comme unité un cycle d'HORLOGE d'un générateur de synchronisation.

9.  Appareil selon la revendication 6, dans lequel le contrôleur comprend en outre des moyens de sélection (113) pour sélectionner au moins l'une des zones secondaires (54) des première et deuxième images.

10. Appareil selon la revendication 6, dans lequel le dispositif de prise de vue est installé sur un véhicule.

11. Appareil selon la revendication 10, dans lequel l'image combinée est utilisée pour détecter un obstacle près du véhicule.

FIG. 1

|  | 2A01 | 2A02 | 2A03 | 2A04 | 2A05 |
|--|------|------|------|------|------|

(A)

|  | 2B01 | 2B02 | 2B03 | 2B04 | 2B05 |
|--|------|------|------|------|------|

(B)

|  | 2C01 | 2C02 | 2C03 | 2C04 | 2C05 |
|--|------|------|------|------|------|

(C)

|  | 2D01 | 2D02 | 2D03 | 2D04 | 2D05 |
|--|------|------|------|------|------|

(D)

| | 2E01 | 2E02 | 2E03 | 2E04 | 2E05 |
|--|------|------|------|------|------|
| (E) | LOW SPEED SHUTTER SIGNAL 1 | HIGH SPEED SHUTTER SIGNAL 1 | LOW SPEED SHUTTER SIGNAL 2 | HIGH SPEED SHUTTER SIGNAL 2 | LOW SPEED SHUTTER SIGNAL 3 |

| | 2F01 | 2F02 | 2F03 | 2F04 | 2F05 |
|--|------|------|------|------|------|
| (F) | LOW SPEED SHUTTER SIGNAL 1 | LOW SPEED SHUTTER SIGNAL 1M | LOW SPEED SHUTTER SIGNAL 2 | LOW SPEED SHUTTER SIGNAL 2M | LOW SPEED SHUTTER SIGNAL 3 |

| | 2G01 | 2G02 | 2G03 | 2G04 | 2G05 |
|--|------|------|------|------|------|
| (G) | HIGH SPEED SHUTTER SIGNAL 0M | HIGH SPEED SHUTTER SIGNAL 1 | HIGH SPEED SHUTTER SIGNAL 1M | HIGH SPEED SHUTTER SIGNAL 2 | HIGH SPEED SHUTTER SIGNAL 2M |

| | 2H01 | 2H02 | 2H03 | 2H04 | 2H05 |
|--|------|------|------|------|------|
| (H) | LOW SPEED SHUTTER SIGNAL 1 CONVERSION | LOW SPEED SHUTTER SIGNAL 1M CONVERSION | LOW SPEED SHUTTER SIGNAL 2 CONVERSION | LOW SPEED SHUTTER SIGNAL 2M CONVERSION | LOW SPEED SHUTTER SIGNAL 3 CONVERSION |

| | 2I01 | 2I02 | 2I03 | 2I04 | 2I05 |
|--|------|------|------|------|------|
| (I) | HIGH SPEED SHUTTER SIGNAL 0M CONVERSION | HIGH SPEED SHUTTER SIGNAL 1 CONVERSION | HIGH SPEED SHUTTER SIGNAL 1M CONVERSION | HIGH SPEED SHUTTER SIGNAL 2 CONVERSION | HIGH SPEED SHUTTER SIGNAL 2M CONVERSION |

| | 2J01 | LOW SPEED SHUTTER SIGNAL 1M CONVERSION + HIGH SPEED SHUTTER SIGNAL 1 CONVERSION / 2J03 | | LOW SPEED SHUTTER SIGNAL 2M CONVERSION + HIGH SPEED SHUTTER SIGNAL 2 CONVERSION / 2J05 | |
|--|------|------|------|------|------|
| (J) | | | | | |
| | LOW SPEED SHUTTER SIGNAL 1 CONVERSION + HIGH SPEED SHUTTER SIGNAL 0M CONVERSION / 2J02 | | LOW SPEED SHUTTER SIGNAL 2 CONVERSION + HIGH SPEED SHUTTER SIGNAL 1M CONVERSION / 2J04 | | LOW SPEED SHUTTER SIGNAL 3 CONVERSION + HIGH SPEED SHUTTER SIGNAL 2M CONVERSION |

|  | 2K01 | 2K02 | 2K03 | 2K04 | 2K05 |
|--|------|------|------|------|------|

(K)

# FIG. 2

27

IMAGE SIGNAL OUTPUT

3b SATURATION POINT OF LOW SPEED
SHUTTER IMAGE SIGNAL OUTPUT

3d SATURATION POINT OF HIGH
SPEED SHUTTER IMAGE
SIGNAL OUTPUT

3a LOW SPEED SHUTTER
IMAGE SIGNAL OUTPUT

3c HIGH SPEED SHUTTER
IMAGE SIGNAL OUTPUT

0  1  2  3  4  5  6  7  8  9  10  11  12  13  14

INCIDENT LIGHT QUANTITY

# FIG. 3

IMAGE SIGNAL OUTPUT

4a IMAGE SIGNAL OUTPUT
OBTAINED BY COMBINATION

0  1  2  3  4  5  6  7  8  9  10  11  12  13  14

INCIDENT LIGHT QUANTITY

# FIG. 4

54                                                    53

| 1 | 2 | 3 | 4 | 5 |
|---|---|---|---|---|
| 6 | 7 | 8 | 9 | 10 |
| 11 | 12 | 13 | 14 | 15 |
| 16 | 17 | 18 | 19 | 20 |
| 21 | 22 | 23 | 24 | 25 |

# FIG. 5

FIG. 6

EP 1 339 227 B1

**FIG. 7**

FIG. 8

48

20

LUMINANCE
ACCUMULATION
VALUE

LUMINANCE
PEAK VALUE

86

LUMINANCE AVERAGE
VALUE CALCULATION
SECTION

98

LOW SPEED SHUTTER SPEED
CONTROL SIGNAL
GENERATION SECTION

99

LOW SPEED AGC CIRCUIT
CONTROL SIGNAL
GENERATION SECTION

100

LOW SPEED SHUTTER FINE
ADJUSTMENT PROCESSING
SECTION

92

LOW SPEED SHUTTER
SPEED CONTROL SIGNAL

103

HIGH SPEED SHUTTER SPEED
CONTROL SIGNAL
GENERATION SECTION

104

HIGH SPEED AGC CIRCUIT
CONTROL SIGNAL
GENERATION SECTION

105

HIGH SPEED SHUTTER FINE
ADJUSTMENT PROCESSING
SECTION

93

HIGH SPEED SHUTTER
SPEED CONTROL SIGNAL

95

CHARACTERISTIC
CONVERSION CONTROL
SIGNAL GENERATION
SECTION

LOW SPEED CHARACTERISTIC
CONVERSION CONTROL SIGNAL

HIGH SPEED CHARACTERISTIC
CONVERSION CONTROL SIGNAL

91

96

COMBINATION RATIO
CONTROL SIGNAL
GENERATION
SECTION

COMBINATION RATIO
CONTROL SIGNAL

AGC CIRCUIT
CONTROL SIGNAL

87

FIG. 9

FIG. 10A

FIG. 10B

89

90

FIG. 10C

89

90

FIG. 10D

FIG. 11

FIG. 12

FIG. 13

EP 1 339 227 B1

FIG. 14

ELECTRONIC SHUTTER PULSE

20

109 SHUTTER PULSE SWITCHING CIRCUIT

FI

107

49

101 ONE-CLOCK UNIT SHIFT REGISTER

112 OR CIRCUIT

110 SHUTTER PULSE GENERATION SECTION TAKING H PERIODS AS UNIT

111 SHUTTER PULSE GENERATION SECTION TAKING SEVERAL TENS CLOCK PERIODS AS UNIT

LOW SPEED SHUTTER PULSE GENERATION SECTION

108

HIGH SPEED SHUTTER PULSE GENERATION SECTION (INTERNAL CONFIGURATION IS THE SAME AS LOW SPEED SHUTTER PULSE GENERATION SECTION)

CLK, HD, VD, FI

CONTROL SIGNAL

48 MICROCOMPUTER CIRCUIT

38

VD

t2    t4

t1    t3    t5

# FIG. 15A

ELECTRONIC SHUTTER
IN V PERIOD

t1

H PERIOD ELECTRONIC
SHUTTER START TIMING

H PERIOD ELECTRONIC
SHUTTER INTERVAL

VARIED BY
MICROCOMPUTER

VARIED BY
MICROCOMPUTER

SEVERAL CLK PERIOD ELECTRONIC
SHUTTER INTERVAL

t3

SEVERAL CLK PERIOD
ELECTRONIC SHUTTER
START TIMING

V PERIOD

# FIG. 15B

HD

# FIG. 16A

ELECTRONIC SHUTTER
OF H PERIOD

t1

H PERIOD

# FIG. 16B

CLK

## FIG. 17A

ELECTRONIC SHUTTER
OF SEVERAL CLK PERIODS

t3

SEVERAL CLK PERIODS

## FIG. 17B

CLK

## FIG. 18A

ELECTRONIC SHUTTER CAN
BE VARIED IN TIME AXIS
DIRECTION BY TAKING
CLOCK AS UNIT

SEVERAL CLK PERIODS

## FIG. 18B

FIG. 19

EP 1 339 227 B1

124

CCD

(640, 480)

123

TRANSFER PULSE
( IMAGE PICKUP DEVICE )
DRIVE CIRCUIT

IMAGE SIGNAL
OUTPUT

1/30 sec

## FIG. 20A

CMOS

(640, 480)

123

125

TRANSFER PULSE
( IMAGE PICKUP DEVICE )
DRIVE CIRCUIT

IMAGE SIGNAL
OUTPUT

IN A MOMENT

## FIG. 20B

SKY

(INFORMATION THAT IS NOT SO IMPORTANT)

VEHICLE

WHITE LINE

(IMPORTANT INFORMATION)

FIG. 21

| A1 FIELD LOW SPEED SHUTTER IMAGE | B1 FIELD HIGH SPEED SHUTTER IMAGE | A2 FIELD LOW SPEED SHUTTER IMAGE | B2 FIELD HIGH SPEED SHUTTER IMAGE |

CCD OUTPUT

FIG. 22A
PRIOR ART

| IMAGE OBTAINED BY COMBINING A1 FIELD AND B0 FIELD | IMAGE OBTAINED BY COMBINING A1 FIELD AND B1 FIELD | IMAGE OBTAINED BY COMBINING A2 FIELD AND B1 FIELD | IMAGE OBTAINED BY COMBINING A2 FIELD AND B2 FIELD |

WIDE DYNAMIC RANGE CAMERA IMAGE

FIG. 22B
PRIOR ART

FIG. 23
PRIOR ART

EP 1 339 227 B1